# EUROPEAN PATENT SPECIFICATION

(11) **EP 2 950 136 B1**
(45) Date of publication and mention of the grant of the patent: **27.02.2019**
(21) Application number: 14002565.1
(22) Date of filing: 22.07.2014
(51) Int. Cl.: G02F 1/1333

(54) **Display device**
Anzeigevorrichtung
Dispositif d'affichage

(30) Priority: 30.05.2014 KR 20140065649
(43) Date of publication of application: 02.12.2015
(73) Proprietor: LG Electronics Inc., Seoul 150-721 (KR)
(72) Inventor: Hayun, Lee, 137-893 Seoul (KR); Youngmin, Kim, 137-893 Seoul (KR); Cheolsoo, Kim, 137-893 Seoul (KR); Mingeun, Jeong, 137-893 Seoul (KR); Bumgi, Min, 137-893 Seoul (KR); Wansik, Kim, 137-893 Seoul (KR)
(74) Representative: Beyer, Andreas

(56) References cited:
- US-A1- 2009 122 221
- US-A1- 2012 182 700

## Description

This application claims the benefit of Korean Patent Application No. 10-2014-0065649 filed on May 30, 2014.

### BACKGROUND OF THE INVENTION

### Field of the Invention

Embodiments of the invention relate to a display device.

### Discussion of the Related Art

With the development of the information society, various demands for display devices have been increasing. Various display devices, such as liquid crystal displays (LCDs), plasma display panels (PDPs), electroluminescent displays (ELDs), and vacuum fluorescent displays (VFDs), have been recently studied and used to meet various demands for the display devices. Among the display devices, a liquid crystal display panel of the liquid crystal display includes a liquid crystal layer, and a thin film transistor (TFT) substrate and a color filter substrate which are positioned opposite each other with the liquid crystal layer interposed therebetween. The liquid crystal display panel displays an image using light provided by a backlight unit of the liquid crystal display.

US 2012/182700 A1 discloses a display device with a display panel, a back cover and a bracket attached to a back surface of a back substrate of the display panel. In one embodiment, the bracket includes a groove and the back cover includes a protrusion corresponding to the groove. The protrusion of the back cover may be inserted into the groove of the bracket.

### SUMMARY OF THE INVENTION

The present disclosure provides a display device with the features of claim 1. Advantageous embodiments are defined in the dependent claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIGS. 1 and 2 schematically illustrate configuration of a display device according to an exemplary embodiment of the invention;
FIGS. 3 to 42 illustrate in detail configuration of a display device according to an exemplary embodiment of the invention;
FIGS. 43 to 59 illustrate another configuration of a display device not according to the present invention; and
FIGS. 60 to 74 illustrate another configuration of a display device not according to the present invention.

### DETAILED DESCRIPTION OF THE EMBODIMENTS

Reference will now be made in detail embodiments of the invention examples of which are illustrated in the accompanying drawings. Since the present invention may be modified in various ways and may have various forms, specific embodiments are illustrated in the drawings and are described in detail in the present specification. However, it should be understood that the present invention are not limited to specific disclosed embodiments, but include all modifications included within the technical scope of the present invention as defined by the appended claims.

The terms 'first', 'second', etc. may be used to describe various components, but the components are not limited by such terms. The terms are used only for the purpose of distinguishing one component from other components. For example, a first component may be designated as a second component without departing from the scope of the present invention. In the same manner, the second component may be designated as the first component.

The term "and/or" encompasses both combinations of the plurality of related items disclosed and any item from among the plurality of related items disclosed.

When an arbitrary component is described as "being connected to "or" being linked to" another component, this should be understood to mean that still another component(s) may exist between them, although the arbitrary component may be directly connected to, or linked to, the second component. In contrast, when an arbitrary component is described as "being directly connected to" or "being directly linked to" another component, this should be understood to mean that no component exists between them.

The terms used in the present application are used to describe only specific embodiments or examples, and are not intended to limit the present invention. A singular expression can include a plural expression as long as it does not have an apparently different meaning in context.

In the present application, the terms "include" and "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

Unless otherwise specified, all of the terms which are used herein, including the technical or scientific terms, have the same meanings as those that are generally understood by a person having ordinary knowledge in the art to which the present invention pertains. The terms defined in a generally used dictionary must be understood to have meanings identical to those used in the context of a related art, and are not to be construed to have ideal or excessively formal meanings unless they are obviously specified in the present application.

The following exemplary embodiments of the present invention are provided to those skilled in the art in order to describe the present invention more completely. Accordingly, shapes and sizes of elements shown in the drawings may be exaggerated for clarity.

Hereinafter, a liquid crystal display panel is used as an example of a display panel. Other display panels may be used. For example, a plasma display panel (PDP), a field emission display (FED) panel, and an organic light emitting display panel may be used.

A display panel according to the embodiment of the invention may include a first long side LS1, a second long side LS2 opposite the first long side LS1, a first short side SS1 adjacent to the first long side LS1 and the second long side LS2, and a second short side SS2 opposite the first short side SS1.

In the embodiment of the invention, the first short side SS1 may be referred to as a first side area; the second short side SS2 may be referred to as a second side area opposite the first side area; the first long side LS1 may be referred to as a third side area which is adjacent to the first side area and the second side area and is positioned between the first side area and the second side area; and the second long side LS2 may be referred to as a fourth side area which is adjacent to the first side area and the second side area, is positioned between the first side area and the second side area, and is opposite to the third side area.

The embodiment of the invention describes that lengths of the first and second long sides LS1 and LS2 are longer than lengths of the first and second short sides SS1 and SS2 for the sake of brevity and ease of reading. However, the lengths of the first and second long sides LS1 and LS2 may be almost equal to the lengths of the first and second short sides SS1 and SS2.

In the following description, a first direction DR1 may be a direction parallel to the long sides LS1 and LS2 of the display panel 100, and a second direction DR2 may be a direction parallel to the short sides SS1 and SS2 of the display panel 100.

Further, a third direction DR3 may be a direction vertical to the first direction DR1 and/or the second direction DR2.

In the embodiment of the invention, the first direction DR1 and the second direction DR2 may be commonly referred to as a horizontal direction.

Further, the third direction DR3 may be referred to as a vertical direction.

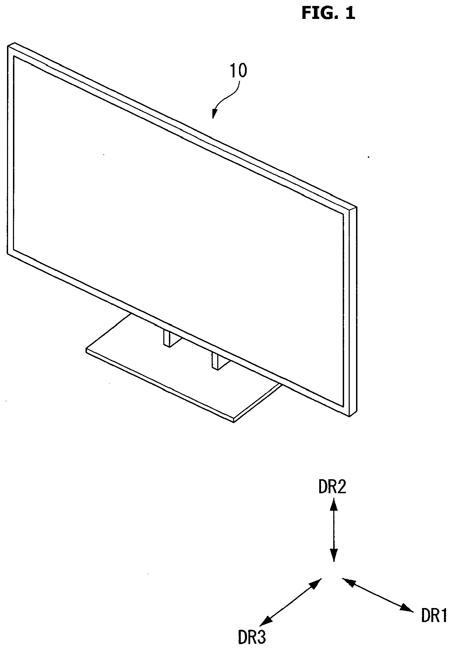

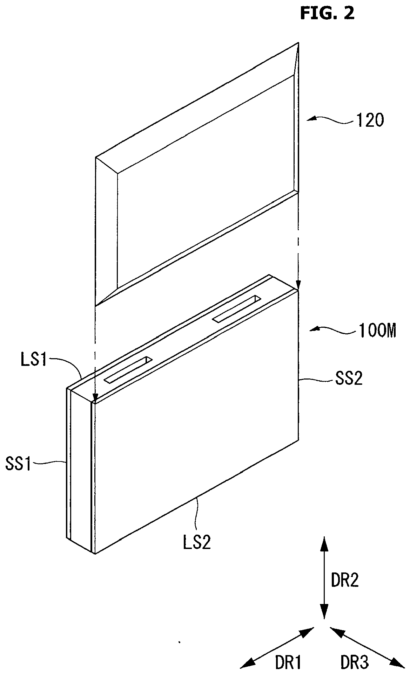

FIGS. 1 and 2 schematically illustrate configuration of a display device according to an exemplary embodiment of the invention.

As shown in FIGS. 1 and 2, a display device 10 according to the embodiment of the invention may include a display module 100M and a back cover 120, which is positioned in the rear of the display module 100M and is connected to the display module 100M.

Preferably, as shown in FIG. 2, the back cover 120 may be connected to the display module 100M in a sliding manner in a direction (i.e., the second direction DR2) from the first long side LS1 to the second long side LS2.

In other words, the back cover 120 may be inserted into a first short side SS1, a second short side SS2 opposite the first short side SS1, and a first long side LS1, which is adjacent to the first and second short sides SS1 and SS2 and is positioned between the first short side SS1 and the second short side SS2, of the display module 100M in the sliding manner.

The back cover 120 may include a first protrusion extending toward a second side area opposite a first side area at an end of the first side area, a second protrusion extending toward the first side area at an end of the second side area, and a third protrusion extending toward a fourth side area, which is adjacent to the first side area and the second side area and is opposite to a third side area, at an end of the third side area adjacent to the first side area and the second side area, so as to connect the back cover 120 to the display module 100M in the sliding manner as described above.

The display module 100M may include a first connector corresponding to the first protrusion, a second connector corresponding to the second protrusion, and a third connector corresponding to the third protrusion.

The configuration of the display device is described in detail below.

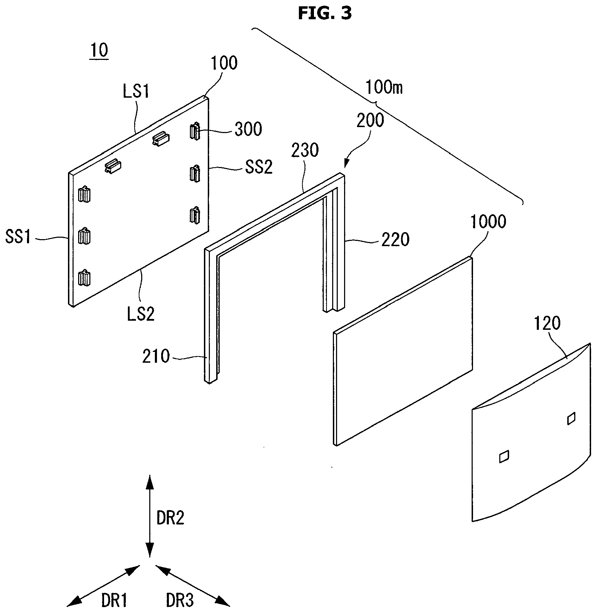

FIGS. 3 to 42 illustrate in detail configuration of a display device according to the embodiment of the invention. In the following description, the descriptions of the configuration and the structure described above may be omitted.

As shown in FIG. 3, a display device 10 according to the embodiment of the invention may comprise a display module 100M including a display panel 100, a fixer 300, and a guide panel 200, and a back cover 120.

The display module 100M may further include a frame 1000 which is positioned in the rear of the display panel 100 and is connected to the guide panel 200. The frame 1000 may be positioned between the display panel 100 and the back cover 120.

The embodiment of the invention describes that the display module 100M includes the display panel 100, the fixer 300, and the guide panel 200. However, the display module 100M may further include an optical layer, a light source, and/or a top case.

The display panel 100 displaying an image may include a front substrate and a back substrate, which are positioned opposite each other. The fixer 300 may be attached to a non-display area of a back surface of the back substrate of the display panel 100.

The back cover 120 may be connected to the guide panel 200.

Although not shown, the back cover 120 may protect various components positioned between the back cover 120 and the display panel 100.

The fixer 300 may be attached to a back surface of the display panel 100 using an adhesive layer. More specifically, the fixer 300 may be attached to the back surface of the back substrate of the display panel 100 using the adhesive layer.

A plurality of fixers 300 may be attached to the back surface of the display panel 100. For example, at least one fixer 300 may be attached to the back surface of the display panel 100 on a first long side LS1, a first short side SS1, and a second short side SS2 of the display panel 100.

The guide panel 200 may cover the fixer 300 and may be connected to the fixer 300.

The guide panel 200 may be positioned at an edge of the back surface of the display panel 100.

The guide panel 200 may include a first guide panel 210 corresponding to a first side area (i.e., the first short side SS1) of the display panel 100, a second guide panel 220 corresponding to a second side area (i.e., the second short side SS2) of the display panel 100, and a third guide panel 230 corresponding to a third side area (i.e., the first long side LS1) of the display panel 100. It may be preferable, but not required, that the first guide panel 210, the second guide panel 220, and the third guide panel 230 form one body.

The guide panel 200 may contain a resin material and a glass fiber material, so as to improve rigidity. This will be described in detail later.

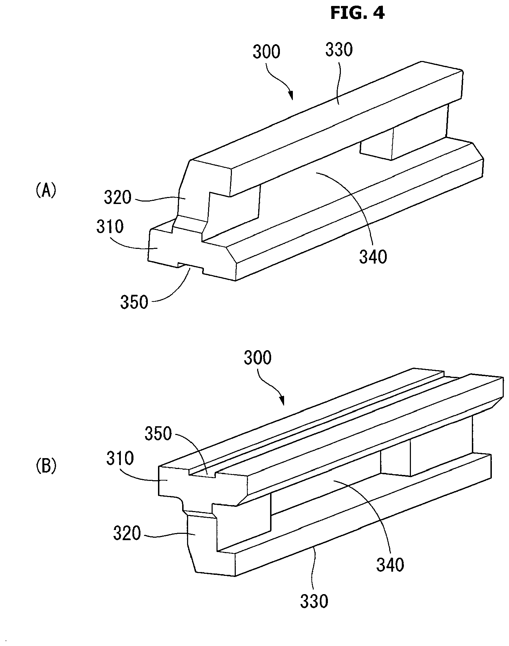

As shown in FIG. 4, the fixer 300 may include a base part 310 including a groove 350, to which an adhesive layer is applied, a connector 320 extending from the base part 310 in a vertical direction (i.e., a third direction DR3), and a head part 330 extending from an end of the connector 320 in a horizontal direction (i.e., a first direction DR1 and/or a second direction DR2) perpendicular to the vertical direction.

More specifically, the groove 350 may be formed at a first surface of the base part 310, and the connector 320 may extend from a second surface opposite the first surface in the vertical direction (i.e., the third direction DR3).

The connector 320 may have an opening 340.

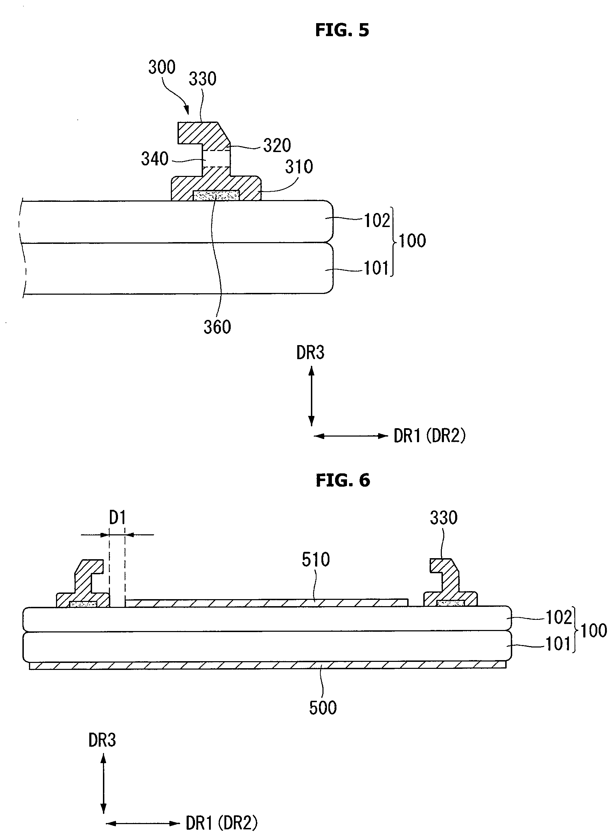

As shown in FIG. 5, an adhesive layer 360 may be formed between the fixer 300 and a back substrate 102 of the display panel 100. Hence, the fixer 300 may be attached to a back surface of the back substrate 102 of the display panel 100. Preferably, the adhesive layer 360 may be formed on the groove 350 of the base part 310 of the fixer 300.

As described above, when the fixer 300 is attached to the back surface of the back substrate 102 using the adhesive layer 360, a supporter, such as a pem nut and a boss, and a fastening member, such as a screw, are not used to fasten the fixer 300 to the back substrate 102. Therefore, a fixing process may be simply performed, the manufacturing cost may be reduced, and a thickness of the display device 10 may be reduced.

The display panel 100 may include a front substrate 101 and the back substrate 102, which are positioned opposite each other and are attached to each other to form a uniform cell gap therebetween. A liquid crystal layer (not shown) may be formed between the front substrate 101 and the back substrate 102.

A seal part may be formed between the front substrate 101 and the back substrate 102 to seal the liquid crystal layer.

A color filter may be positioned on the front substrate 101 to implement red, green, and blue colors.

The color filter may include a plurality of pixels each including red, green, and blue subpixels. When light is incident on the color filter, the color filter may generate images corresponding to the red, green, or blue color.

A predetermined transistor, for example, a thin film transistor (TFT) may be formed on the back substrate 102. The transistor may turn on or off liquid crystals in each pixel. In this instance, the front substrate 101 may be referred to as a color filter substrate, and the back substrate 102 may be referred to as a TFT substrate.

The liquid crystal layer may include a plurality of liquid crystal molecules, and the arrangement of the liquid crystal molecules may change by a driving signal supplied by the transistor. Hence, light provided by a backlight unit (not shown) may be incident on the color filter based on changes in the arrangement of the liquid crystal molecules of the liquid crystal layer.

As a result, the color filter may implement red, green, and blue light, and thus a predetermined image may be displayed on the front substrate 101 of the display panel 100.

Since the above-described structure and configuration of the display panel 100 are merely an example, they may be changed, added, or omitted.

As shown in FIG. 6, the display panel 100 may further include a front polarizing film 500 and a back polarizing film 510. For example, the front polarizing film 500 for polarizing light passing through the display panel 100 may be disposed on a front surface of the front substrate 101, and the back polarizing film 510 for polarizing light passing through the optical layer positioned in the rear of the back substrate 102 may be disposed on the back surface of the back substrate 102.

The back polarizing film 510 may be separated from the fixer 300 by a predetermined distance D1 in the horizontal direction (i.e., the first direction DR1 and/or the second direction DR2).

The front polarizing film 500 may overlap the fixer 300 in the vertical direction (i.e., the third direction DR3).

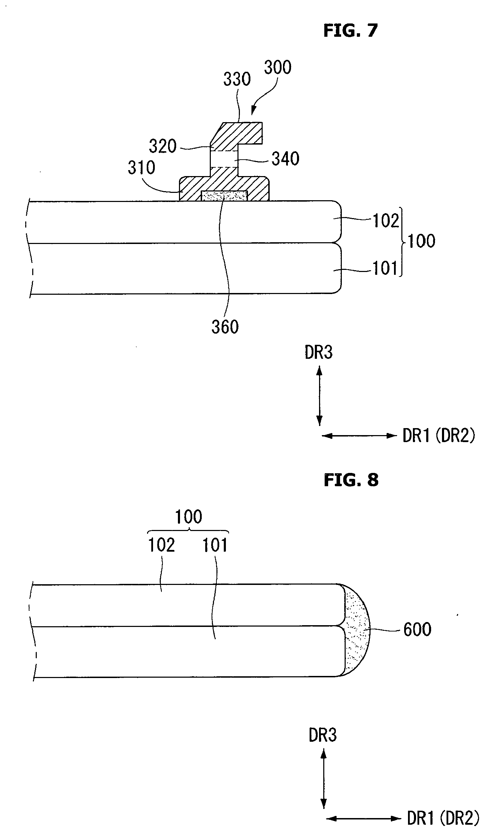

As shown in FIG. 7, the head part 330 may extend from the connector 320 in the horizontal direction (i.e., the first direction DR1 and/or the second direction DR2) far from the center of the display panel 100.

Alternatively, as shown in FIG. 5, the head part 330 may extend from the connector 320 in the horizontal direction (i.e., the first direction DR1 and/or the second direction DR2) toward the center of the display panel 100.

Further, although not shown, the base part 310 of the fixer 300 may not have the groove 350. In this instance, the adhesive layer 360 may be formed on the bottom of the base part 310.

As shown in FIG. 8, the display panel 100 may further include a rein layer 600 formed on the side of the front substrate 101 and/or the side of the back substrate 102.

The rein layer 600 may protect the side of the front substrate 101 and/or the side of the back substrate 102 of the display panel 100 from an impact.

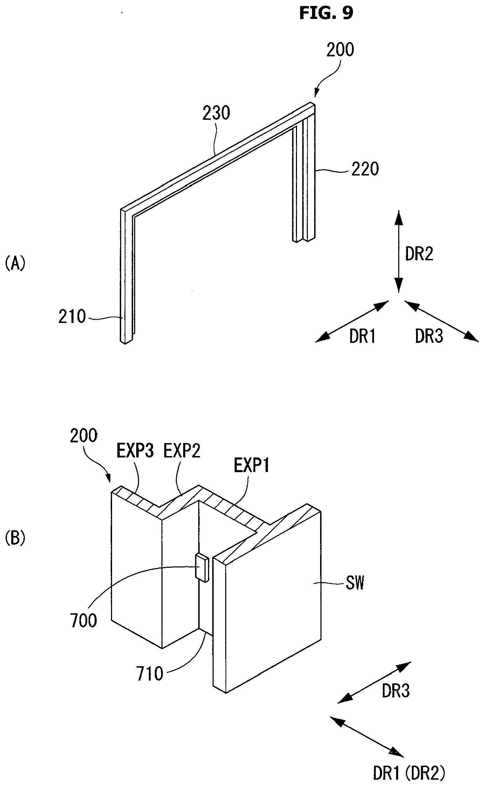

As shown in (A) and (B) of FIG. 9, the guide panel 200 (i.e., a cross section of the guide panel 200) may extend in the horizontal direction (i.e., the first direction DR1 and/or the second direction DR2) and may include a first groove 710, into which the fixer 300 is inserted.

For example, the guide panel 200 may include a side wall SW extending in the vertical direction (i.e., the third direction DR3), a first extension EXP1 extending from the side wall SW in the horizontal direction (i.e., the first direction DR1 and/or the second direction DR2), a second extension EXP2 extending from the first extension EXP1 in the vertical direction (i.e., the third direction DR3), and a third extension EXP3 extending from the second extension EXP2 in the horizontal direction (i.e., the first direction DR1 and/or the second direction DR2).

The side wall SW, the first extension EXP1, and the second extension EXP2 of the guide panel 200 may form the first groove 710.

A first protuberance 700 extending in the horizontal direction (i.e., the first direction DR1 and/or the second direction DR2) may be formed on an inner surface of the first groove 710 of the guide panel 200. The first protuberance 700 may be used to connect the guide panel 200 to the fixer 300.

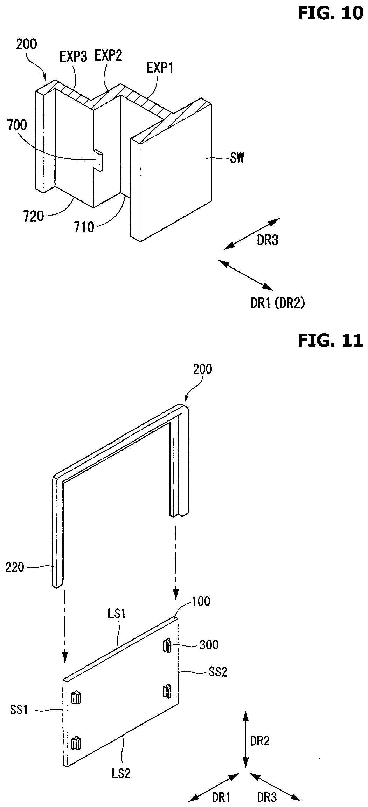

As shown in FIG. 10, the guide panel 200 may further include a second groove 720 extending in the horizontal direction (i.e., the first direction DR1 and/or the second direction DR2). A pad (not shown) may be disposed on the second groove 720. The pad will be described later,
As described above, when the guide panel 200 includes the first groove 710, the fixer 300 may be connected to the guide panel 200 in the sliding manner.

For example, as shown in FIG. 11, at least one fixer 300 may be disposed on each of the first short side SS1 and the second short side SS2 of the display panel 100. Further, the guide panel 200 may be connected to the fixer 300 in the second direction DR2 of the horizontal direction in the sliding manner.

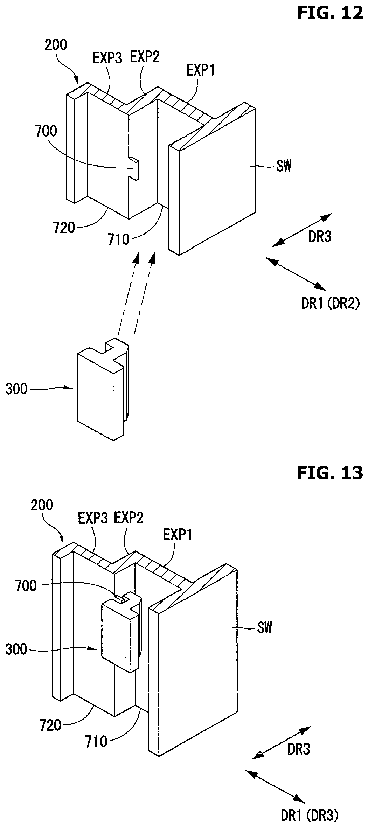

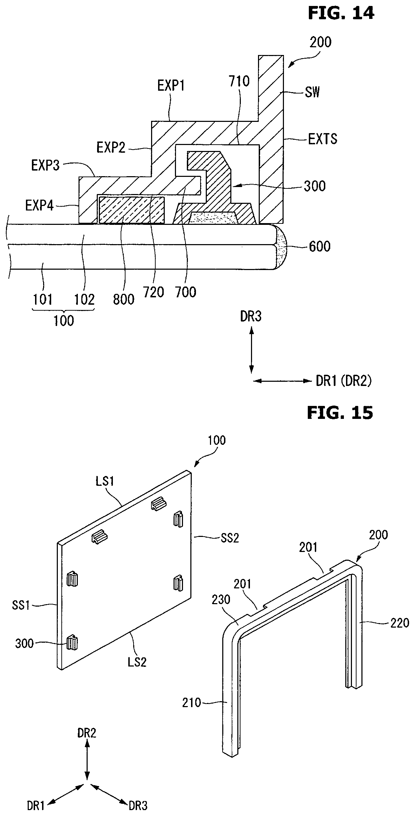

In such a manner, as shown in FIGS. 12 and 13, the fixer 300 may move in the horizontal direction (i.e., the first direction DR1 and/or the second direction DR2) in a state where the fixer 300 is inserted into the first groove 710 of the guide panel 200. Hence, as shown in FIGS. 13 and 14, as the first protuberance 700 is inserted into a space between the base part 310 and the head part 330 of the fixer 300, the fixer 300 may be connected to the guide panel 200 in the sliding manner.

As shown in FIG. 14, the first protuberance 700 of the guide panel 200 may extend from the second extension EXP2 in the horizontal direction (i.e., the first direction DR1 and/or the second direction DR2).

Further, a pad 800 having elasticity may be disposed between the guide panel 200 and the back surface of the display panel 100. Preferably, the pad 800 may be disposed at a location corresponding to the second groove 720 of the guide panel 200.

The guide panel 200 may cover the fixer 300 in a state where the guide panel 200 and the fixer 300 are connected to each other.

As shown in FIG. 15, at least one fixer 300 may be disposed on the first long side LS1 of the display panel 100.

Further, the guide panel 200 may include the first guide panel 210 corresponding to the first short side SS1 of the display panel 100, the second guide panel 220 corresponding to the second short side SS2 of the display panel 100, and the third guide panel 230 corresponding to the first long side LS1 of the display panel 100. The first, second, and third guide panels 210, 220, and 230 may form one body.

In this instance, it may be preferable, but not required, that the third guide panel 230 has an opening 201, so as to connect the fixer 300 disposed on the first long side LS1 of the display panel 100 to the third guide panel 230.

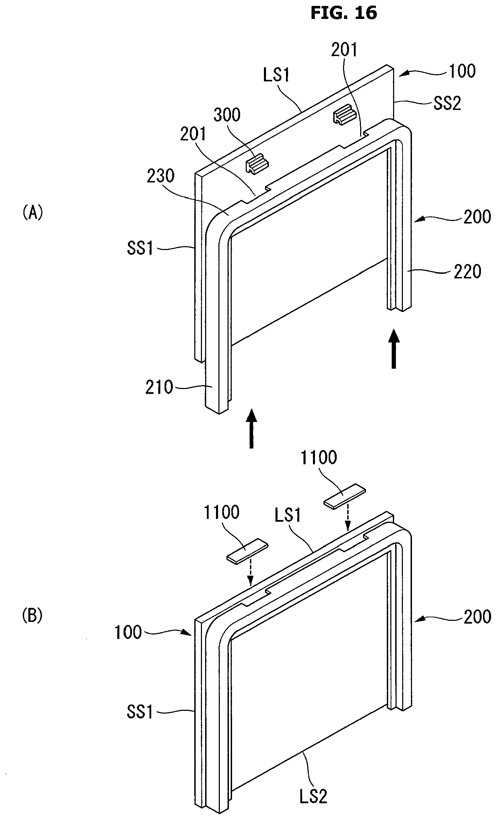

As shown in (A) of FIG. 16, the fixers 300 disposed on the first short side SS1 and the second short side SS2 of the display panel 100 may be inserted into the first grooves 710 of the first and second guide panels 210 and 220.

Next, as shown in (B) of FIG. 16, when the guide panel 200 is pushed up, the fixer 300 disposed on the first long side LS1 of the display panel 100 may pass through the opening 201 formed on the side wall SW of the third guide panel 230.

Afterwards, the opening 201 may be covered using a cover 1100. Namely, the cover 1100 may cover the opening 201.

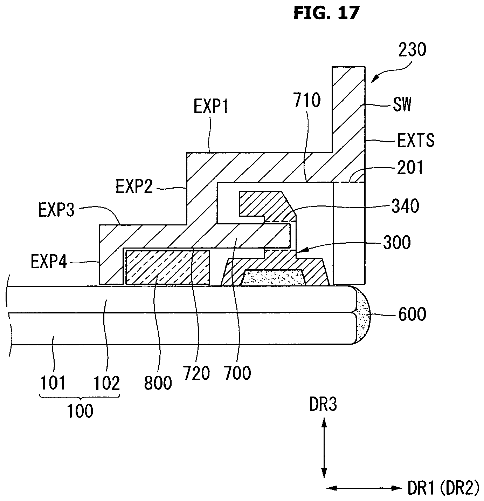

As shown in FIG. 17, when the fixer 300 disposed on the first long side LS1 of the display panel 100 passes through the opening 201 formed in the side wall SW of the third guide panel 230, the first protuberance 700 formed on an inner surface of the first groove 710 may be inserted into a space between the base part 310 and the head part 330 of the fixer 300.

Alternatively, the first protuberance 700 may be inserted into an opening 340 formed in the connector 320 of the fixer 300. For this, a length of the first protuberance 700 of the third guide panel 230 in the horizontal direction (i.e., the first direction DR1 and/or the second direction DR2) may be longer than lengths of the first protuberances 700 of the first and second guide panels 210 and 220 in the horizontal direction (i.e., the first direction DR1 and/or the second direction DR2).

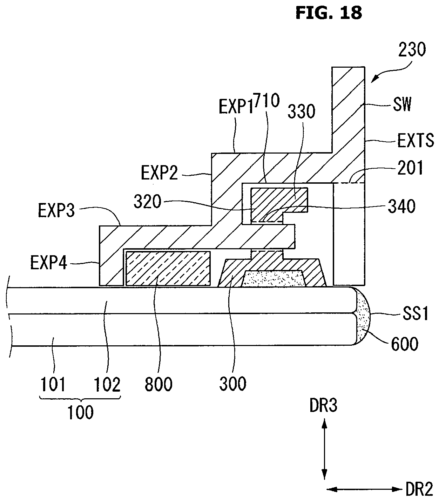

As shown in FIG. 18, the head part 330 of the fixer 300 may extend from the connector 320 in the horizontal direction (i.e., the first direction DR1 and/or the second direction DR2) far from the center of the display panel 100, so as to easily insert the first protuberance 700 of the third guide panel 230 into the opening 340 of the fixer 300.

In this instance, even if the length of the first protuberance 700 of the third guide panel 230 is relatively short, the first protuberance 700 of the third guide panel 230 may be easily inserted into the opening 340 of the fixer 300.

In this instance, the first protuberance 700 of the third guide panel 230 may protrude from the inner surface of the first groove 710 in the direction far from the center of the display panel 100. For example, the first protuberance 700 of the third guide panel 230 may protrude from the second extension EXP2 of the third guide panel 230 in the direction far from the center of the display panel 100.

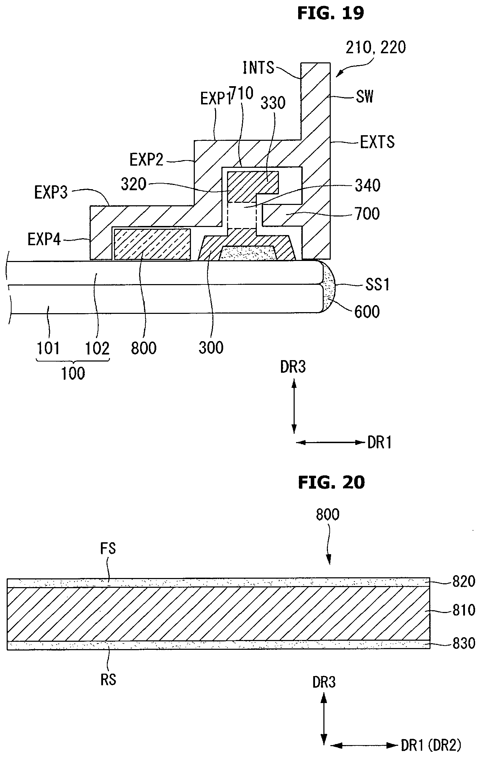

As shown in FIG. 19, the first protuberances 700 of the first and second guide panels 210 and 220 may protrude in the direction toward the center of the display panel 100. For example, the first protuberances 700 of the first and second guide panels 210 and 220 may protrude from the side walls SW of the first and second guide panels 210 and 220 in the direction toward the center of the display panel 100.

In this instance, the fixers 300 disposed on the first and second short sides SS1 and SS2 of the display panel 100 may be easily connected to the first and second guide panels 210 and 220 in the sliding manner.

As shown in FIG. 20, an adhesive layer 800 for attaching the guide panel 200 to the back surface of the display panel 100 may include a base layer 810, a first layer 820 which is formed on a first surface FS of the base layer 810 and has the adhesion, and a second layer 830 which is formed on a second surface RS of the base layer 810 and has the adhesion.

It may be preferable, but not required, that the base layer 810 may be formed of a material having elasticity. For example, the base layer 810 may be formed of urethane foam.

The adhesive layer 800 having the above-described configuration may have the elasticity and the flexibility as well as the adhesion. Hence, the adhesive layer 800 may prevent an external force from being applied to the guide panel 200 and thus may prevent the external force from being transferred to the display panel 100.

The adhesive layer 800 having the above-described configuration may be referred to as a foam pad.

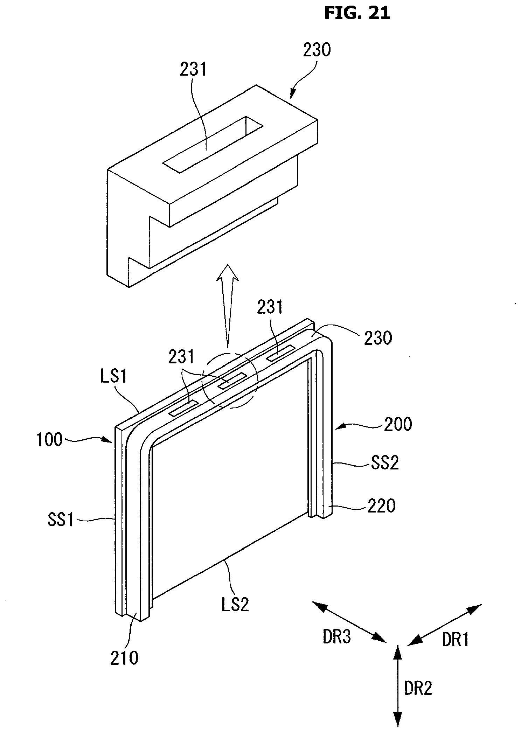

As shown in FIG. 21, the third guide panel 230 may include a third connector 231. The third connector 231 may be formed on an external surface of the side wall SW of the third guide panel 230 and may be a hole or a groove formed toward the second long side LS2.

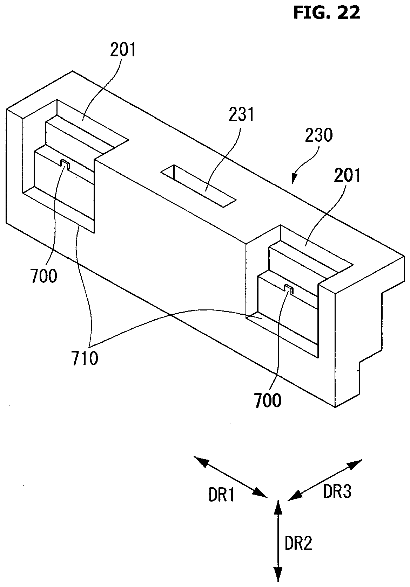

As shown in FIG. 22, the third connector 231 may be positioned between the first grooves 710 corresponding to the fixers 300 on the side wall SW of the third guide panel 230.

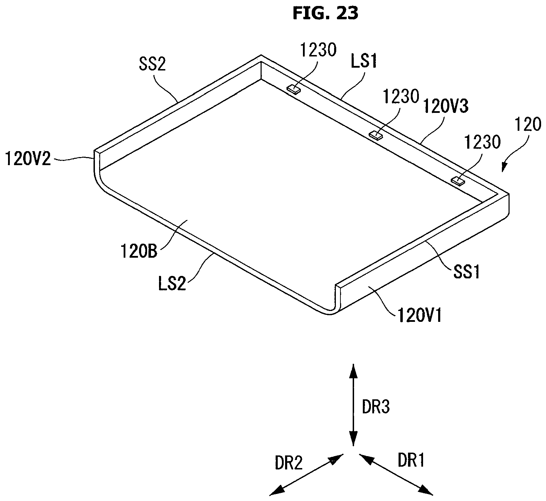

As shown in FIG. 23, the back cover 120 may include a third protrusion 1230 corresponding to the third connector 231.

The back cover 120 may include a main cover 120B, a first vertical part 120V1 which extends from the main cover 120B and covers the external surface of the first guide panel 210, a second vertical part 120V2 which extends from the main cover 120B and covers the external surface of the second guide panel 220, and a third vertical part 120V3 which extends from the main cover 120B and covers the external surface of the third guide panel 230.

The third protrusion 1230 may protrude from the third vertical part 120V3 toward the second long side LS2. The third protrusion 1230 may be inserted into the third connector 231.

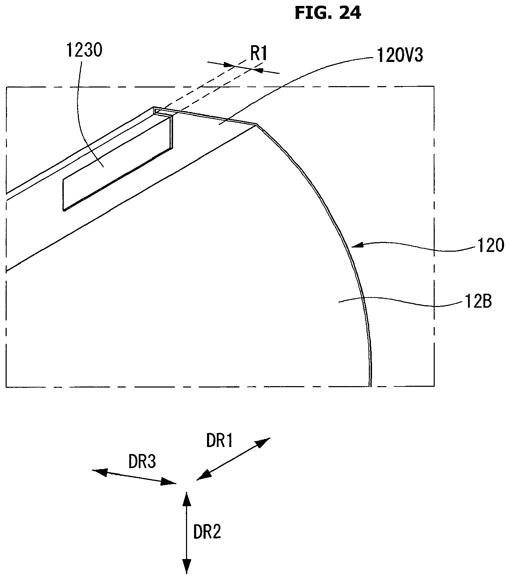

As shown in FIG. 24, an end of the third vertical part 120V3 of the back cover 120 may be formed by folding a portion of the back cover 120. The embodiment of the invention described that the end of the third vertical part 120V3 is formed by folding a portion of the back cover 120. However, an end of the first vertical part 120V1 and/or an end of the second vertical part 120V2 may be formed by folding a portion of the back cover 120.

The third protrusion 1230 may be separated from the end of the third vertical part 120V3 by a predetermined distance R1 in the vertical direction (i.e., the third direction DR3).

Further, although not shown, a first protrusion 1210 of the back cover 120 may be separated from the end of the first vertical part 120V1 by a predetermined distance, and a second protrusion 1220 of the back cover 120 may be separated from the end of the second vertical part 120V2 by a predetermined distance.

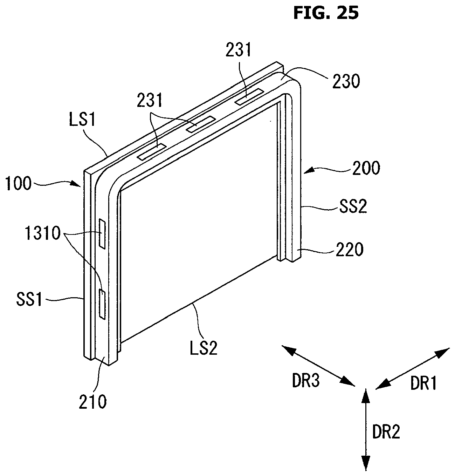

As shown in FIG. 25, the first guide panel 210 has a first connector 1310. Further, although not shown, the second guide panel 220 has a second connector 1320.

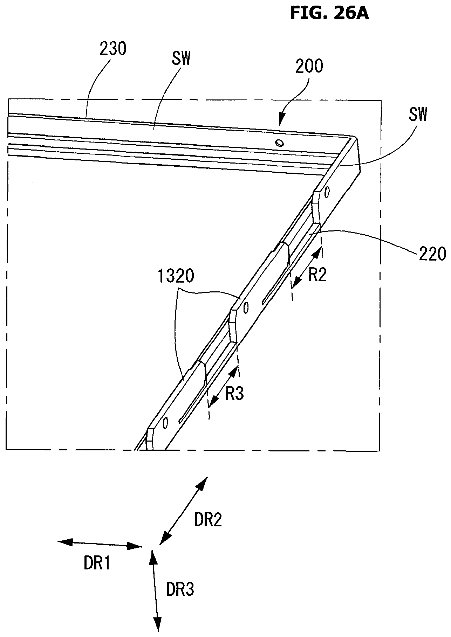

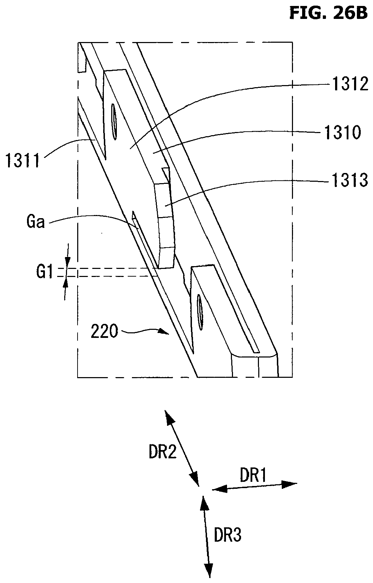

The first connector 1310 and the second connector 1320 are described in detail below with reference to FIGS. 26A and 26B.

As shown in FIGS. 26A and 26B, the second connector 1320 is formed on the side wall SW of the second guide panel 220, and the first connector 1310 is formed on the side wall SW of the first guide panel 210. The first connector 1310 and the second connector 1320 may substantially have the same structure and may be vertically symmetrical to each other.

The first connector 1310 includes a first latch engaged with the first protrusion, and the second connector 1320 includes a second latch engaged with the second protrusion. In the following description, the first connector 1310 is referred to as the first latch, and the second connector 1320 is referred to as the second latch.

A space R3 may be provided between the two adjacent second connectors 1320 (or between the two adjacent first connectors 1310).

Further, a space R2 may be provided between the second connector 1320 and the side wall SW (or between the first connector 1310 and the side wall SW).

As shown in FIG. 26B, each of the first latch and the second latch (i.e., the first connector 1310 and the second connector 1320) includes a first portion 1312 extending from a bottom 1311 in the vertical direction (i.e., the third direction DR3) and a second portion 1313 extending from the first portion 1312 in the horizontal direction (i.e., the first direction DR1 and/or the second direction DR2).

A gap Ga may be formed between the second portion 1313 and the bottom 1311.

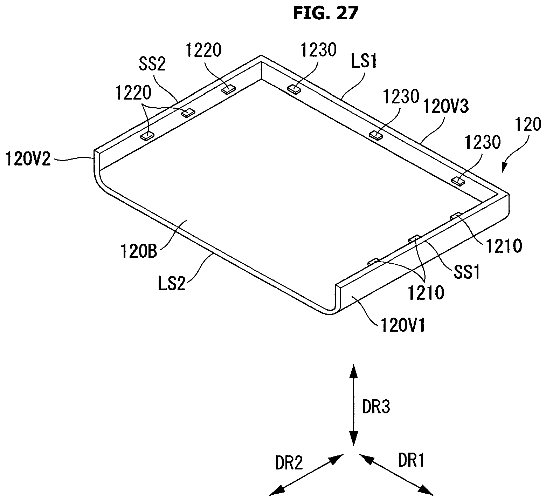

As shown in FIG. 27, the back cover 120 includes the first protrusion 1210 corresponding to the first connector 1310 and the second protrusion 1220 corresponding to the second connector 1320.

The first protrusion 1210 protrudes from the first vertical part 120V1 toward the second vertical part 120V2, and the second protrusion 1220 protrudes from the second vertical part 120V2 toward the first vertical part 120V1.

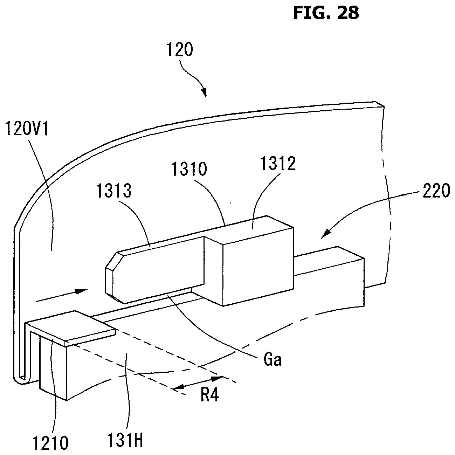

As shown in FIG. 28, the first protrusion 1210 is engaged with the first connector 1310 in an arrow direction in the sliding manner. The first protrusion 1210 is inserted into the gap Ga between the second portion 1313 and the bottom 1311 of the first connector 1310.

Further, the second protrusion 1220 is engaged with the second connector 1320 in the sliding manner. The second protrusion 1220 is inserted into the gap Ga between the second portion 1313 and the bottom 1311 of the second connector 1320.

As described above, the space R2 between the first connector 1310 and the side wall SW may be greater than a length R4 of the first protrusion 1210, and the space R2 between the second connector 1320 and the side wall SW may be greater than a length R4 of the second protrusion 1220, so as to connect the first and second protrusions 1210 and 1220 to the first and second connectors 1310 and 1320 in the sliding manner.

Further, the space R3 between the adjacent first connectors 1310 may be greater than the length R4 of the first protrusion 1210, and the space R3 between the adjacent second connectors 1320 may be greater than the length R4 of the second protrusion 1220.

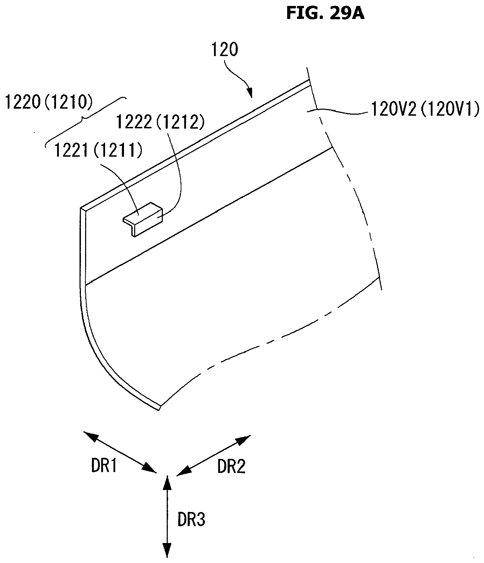

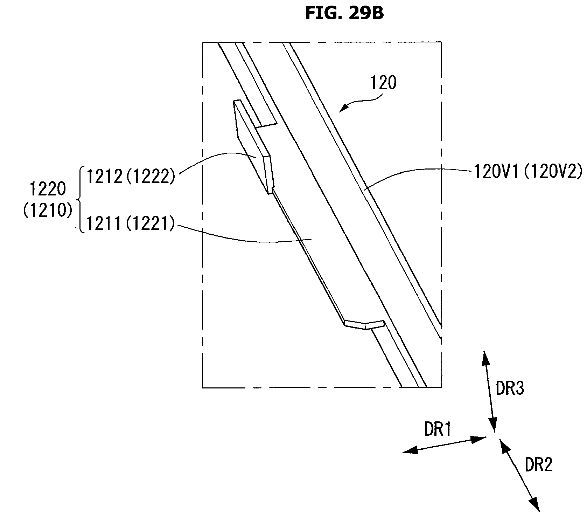

As shown in FIGS. 29A and 29B, the first protrusion 1210 may include a first main protrusion 1211 protruding from the first vertical part 120V1 toward the second vertical part 120V2 and a first auxiliary protrusion 1212 extending from the first main protrusion 1211 in the vertical direction (i.e., the third direction DR3).

Further, the second protrusion 1220 may include a second main protrusion 1221 protruding from the second vertical part 120V2 toward the first vertical part 120V1 and a second auxiliary protrusion 1222 extending from the second main protrusion 1221 in the vertical direction (i.e., the third direction DR3).

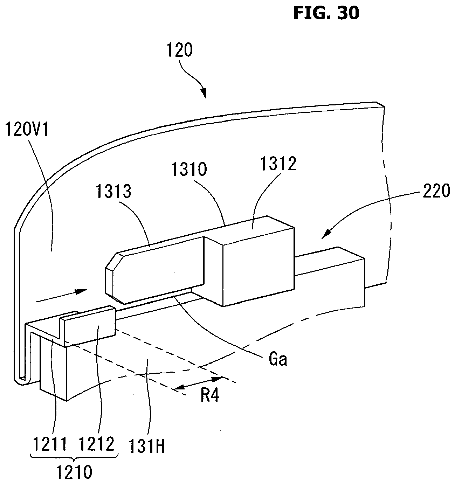

As shown in FIG. 30, the first auxiliary protrusion 1212 of the first protrusion 1210 may be engaged with the second portion 1313 of the first connector 1310 in a state where the first protrusion 1210 is inserted into the gap Ga of the first connector 1310.

Further, the second auxiliary protrusion 1222 of the second protrusion 1220 may be engaged with the second portion 1313 of the second connector 1320 in a state where the second protrusion 1220 is inserted into the gap Ga of the second connector 1320.

In such a structure, the back cover 120 may be easily connected to the display module 100M in the sliding manner.

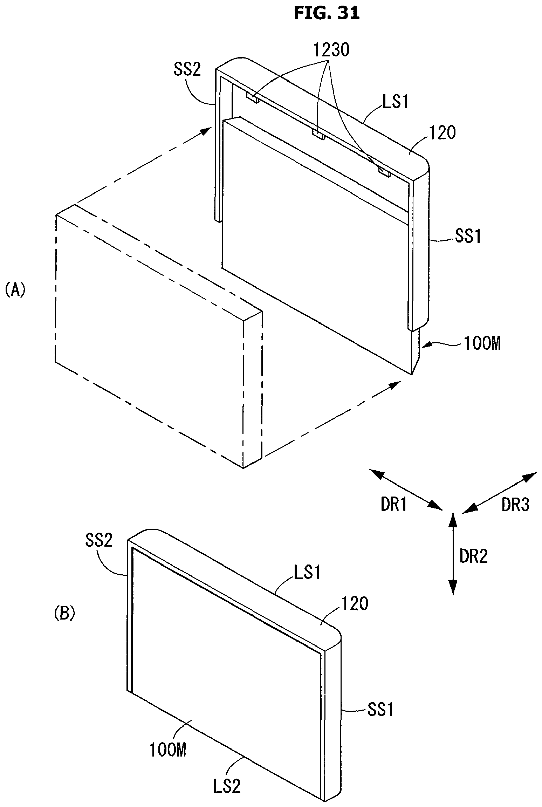

For example, when the display module 100M is pushed toward the first long side LS1 of the back cover 120 in a state where the display module 100M is inserted into the back cover 120 in the vertical direction (i.e., the third direction DR3) as shown in (A) of FIG. 31, the back cover 120 may be connected to the display module 100M as shown in (B) of FIG. 31.

As described above, the back cover 120 may be connected to the display module 100M in the sliding manner.

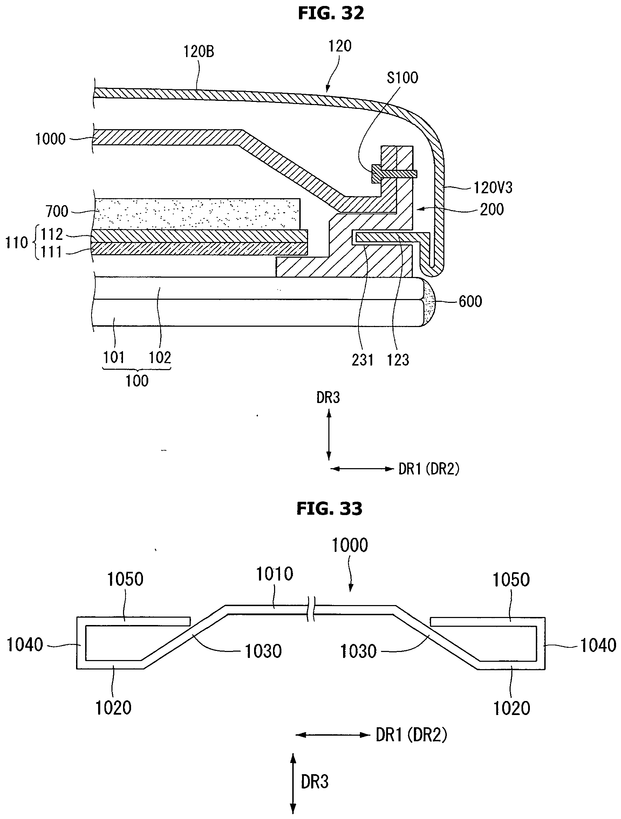

As shown in FIG. 32, which is a cross-sectional view of the first long side LS1 of the display device 10 according to the embodiment of the invention, the third protrusion 1230 of the back cover 120 may be inserted into the third connector 231 of the third guide panel 230.

The frame 1000 positioned between the display panel 100 and the back cover 120 may be connected to the guide panel 200. For example, a fastening member S100, such as a screw, may connect the side wall SW of the guide panel 200 to the frame 1000.

An optical layer 110 may be disposed between the frame 1000 and the display panel 100. Further, a light guide plate 900 may be disposed between the frame 1000 and the display panel 100.

At least one light source (not shown) may be disposed on the frame 1000.

The optical layer 110 may include a diffusion sheet 111 and a prism sheet 112. The embodiment of the invention describes the optical layer 110 including the two functional layers (i.e., the diffusion sheet 111 and the prism sheet 112). However, a structure of the optical layer 110 may be variously changed.

In the embodiment of the invention, the optical layer 110, the light guide plate 900, and the light source may be referred to as a backlight unit.

When the backlight unit includes the light guide plate 900, the light source (not shown), for example, a light emitting diode (LED) may be positioned on the side of the light guide plate 900. The backlight unit having the above-described configuration may be referred to as an edge type backlight unit.

In the embodiment of the invention, the light source may be disposed in the rear of the display panel 100. The backlight unit having the above-described configuration may be referred to as a direct type backlight unit.

Configuration of the backlight unit of the display device 10 according to the embodiment of the invention may be variously changed.

As shown in FIG. 33, the frame 1000 may include a first horizontal frame part 1010 extending in the horizontal direction (i.e., the first direction DR1 and/or the second direction DR2), a second horizontal frame part 1020 which is positioned at an edge of the first horizontal frame part 1010 and extends in the horizontal direction (i.e., the first direction DR1 and/or the second direction DR2), an inclined frame part 1030 which is positioned between the first horizontal frame part 1010 and the second horizontal frame part 1020 and extends in an oblique direction, a vertical frame part 1040 extending from an end of the second horizontal frame part 1020 in the vertical direction (i.e., the third direction DR3), and a third horizontal frame part 1050 which extends from an end of the vertical frame part 1040 toward the inclined frame part 1030 in the horizontal direction (i.e., the first direction DR1 and/or the second direction DR2).

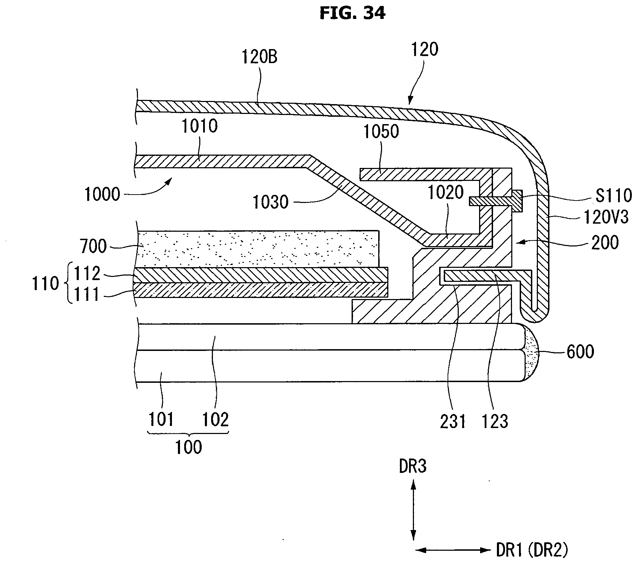

As shown in FIG. 34, the vertical frame part 1040 of the frame 1000 and the side wall SW of the guide panel 200 may be fastened by a predetermined fastening member S110. Hence, the frame 1000 and the guide panel 200 may be strongly connected.

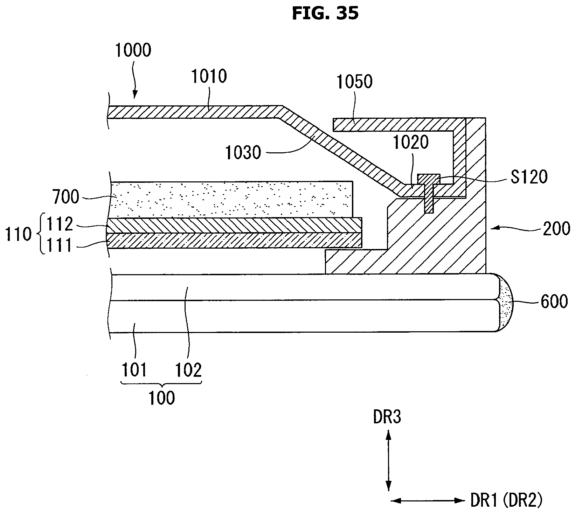

Alternatively, as shown in FIG. 35, a predetermined fastening member S120 may fasten the second horizontal frame part 1020 of the frame 1000 to the guide panel 200. In this instance, a fastening direction of the fastening member S120 may be a direction from the back cover 120 to the display panel 100.

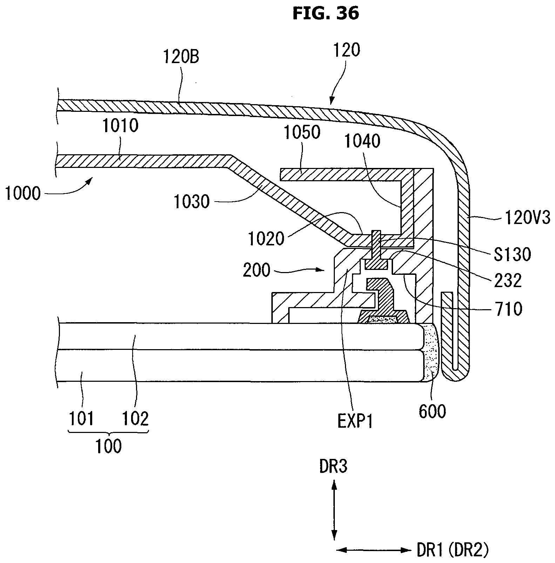

As shown in FIG. 36, a predetermined fastening member S130 may fasten the second horizontal frame part 1020 of the frame 1000 to the guide panel 200, and a fastening direction of the fastening member S130 may be a direction from the display panel 100 to the back cover 120.

In this instance, a second groove 232 for the fastening member S130 may be formed inside the first groove 710 of the guide panel 200. A head part of the fastening member S130 may be positioned in the second groove 232.

In such a structure, the fixer 300 positioned inside the first groove 710 may overlap the fastening member S130.

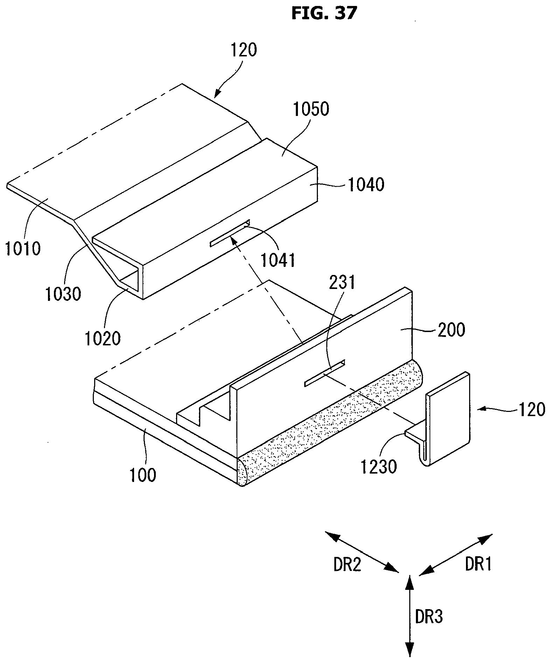

As shown in FIG. 37, the vertical frame part 1040 of the frame 1000 may include a hole 1041 corresponding to the third connector 231. In this instance, the third connector 231 may be an opening.

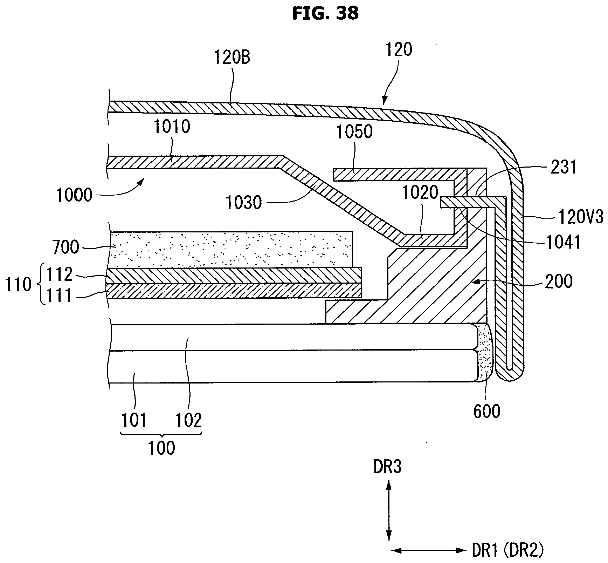

In this instance, as shown in FIG. 38, the third protrusion 1230 of the back cover 120 may pass through the third connector 231 and may be connected to the hole 1041 of the frame 1000. Hence, structural stability of the display device 10 may be improved.

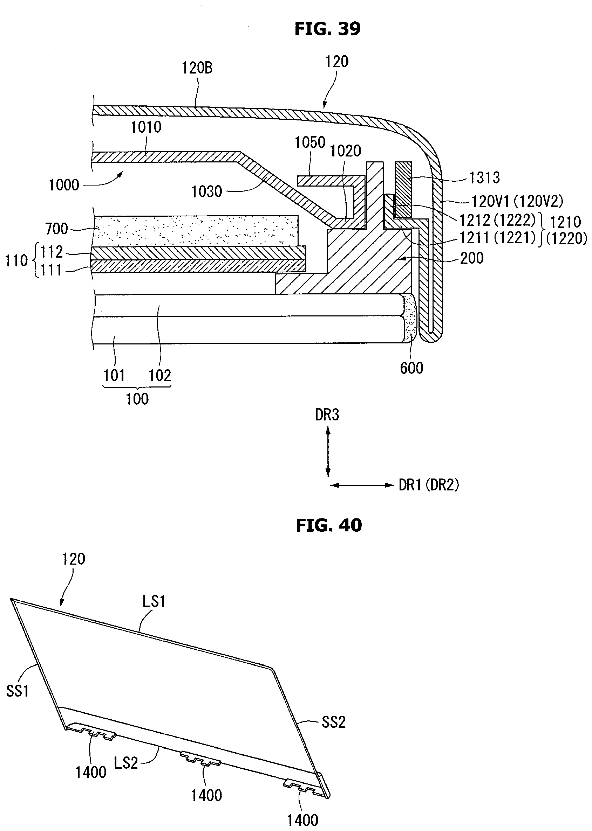

As shown in FIG. 39 which shows a cross section of the first short side SS1 and the second short side SS2 of the display device 10, the first protrusion 1210 and the second protrusion 1220 of the back cover 120 may be engaged with the first connector 1310 and the second connector 1320 of the guide panel 200.

As shown in FIG. 40, the back cover 120 may further include a bottom supporter 1400 disposed on the second long side LS2.

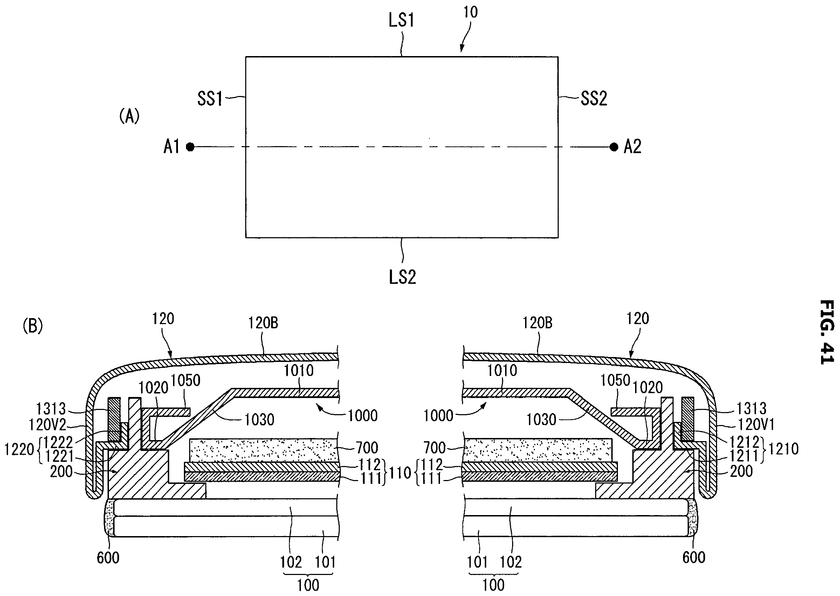

In FIG. 41, (B) is a cross-sectional view of the display device 10 taken along line A1-A2 of (A).

Configuration shown in FIG. 41 was described in detail above.

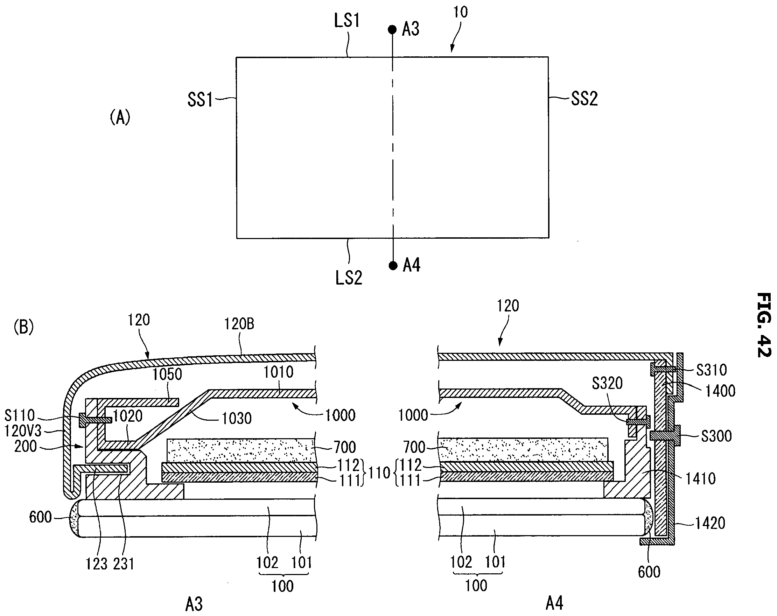

In FIG. 42, (B) is a cross-sectional view of the display device 10 taken along line A3-A4 of (A). Configuration shown in FIG. 42 was described above with reference to FIG. 34.

As shown in (B) of FIG. 42, a bottom guide panel 1410 may be positioned in the rear of the display panel 100 on the second long side LS2 of the display device 10, and the optical layer 110 may be positioned on the bottom guide panel 1410.

Further, the frame 1000 may be connected to the bottom guide panel 1410. For this, a predetermined fastening member S320 may be used.

The bottom supporter 1400 may support the second long side LS2 of the display panel 100 and may be connected to the back cover 120. For this, a predetermined fastening member S310 may be used.

The display device 10 according to the embodiment of the invention may cover an edge of the front surface on the second long side LS2 of the display panel 100 and may further include a bottom cover 1420 supporting the bottom supporter 1400. The bottom cover 1420 may be connected to the bottom supporter 1400. For this, a predetermined fastening member S300 may be used.

As shown in FIGS. 41 and 42, edges of the front surface of the display panel 100 on the first long side LS1, the first short side SS1, and the second short side SS2 of the display device 10 may be exposed.

Further, the side of the display panel 100 on the first long side LS1, the first short side SS1, and the second short side SS2 of the display device 10 may be exposed.

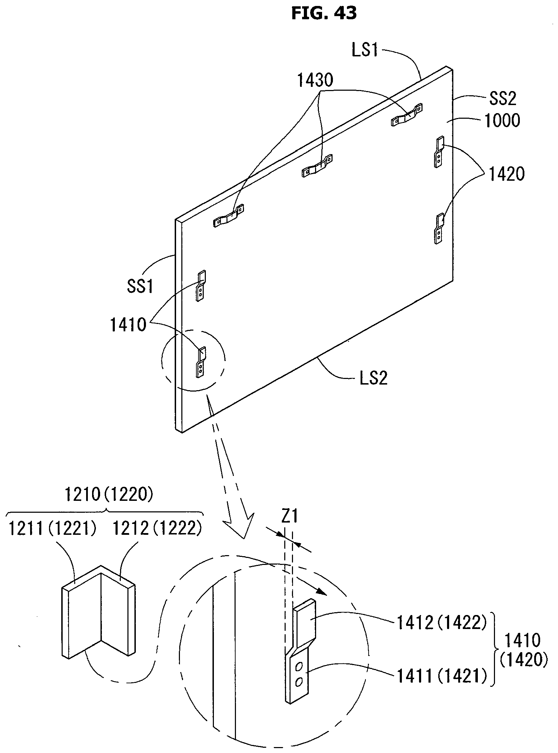

FIGS. 43 to 59 illustrate another configuration of a display device not according to the present invention. In the following description, the descriptions of the configuration and the structure described above may be omitted.

As shown in FIG. 43, a first connector 1410 corresponding to the first protrusion 1210 of the back cover 120 may be disposed on the first short side SS1 of the frame 1000, and a second connector 1420 corresponding to the second protrusion 1220 of the back cover 120 may be disposed on the second short side SS2 of the frame 1000. Further, a third connector 1430 corresponding to the third protrusion 1230 of the back cover 120 may be disposed on the first long side LS1 of the frame 1000.

In this instance, the first protrusion 1210 may be connected to the first connector 1410 in the sliding manner, and the second protrusion 1220 may be connected to the second connector 1420 in the sliding manner.

Namely, the back cover 120 may be inserted into the frame 1000 in the sliding manner.

The first connector 1410 and the second connector 1420 may include first parts 1411 and 1421 connected to the frame 1000 and second parts 1412 and 1422 extending from the first parts 1411 and 1421 toward the first long side LS1, respectively.

The first parts 1411 and 1421 may be connected to the frame 1000 using a fastening member such as a screw.

A space Z1 may be provided between the second parts 1412 and 1422 of the first and second connectors 1410 and 1420 and the frame 1000.

The first protrusion 1210 may be inserted into the space Z1 between the second part 1412 of the first connector 1410 and the frame 1000 in the sliding manner, and the second protrusion 1220 may be inserted into the space Z1 between the second part 1422 of the second connector 1420 and the frame 1000 in the sliding manner.

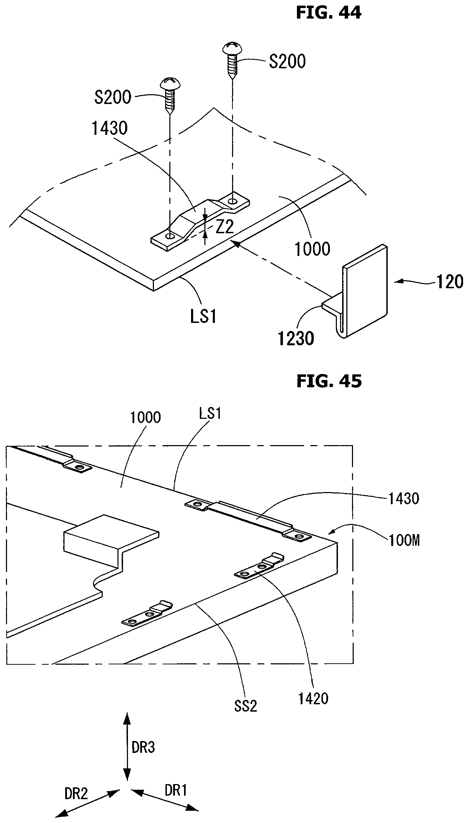

As shown in FIG. 44, both ends of the third connector 1430 may be connected to the frame 1000. For this, a predetermined fastening member S200 may be used.

A space Z2 may be provided between a middle portion of both ends of the third connector 1430 and the frame 1000.

The third protrusion 1230 of the back cover 120 may be inserted into the space Z2 between the third connector 1430 and the frame 1000.

FIG. 45 shows a disposition structure of the first connector 1410, the second connector 1420, and the third connector 1430 disposed on a back surface of the frame 1000.

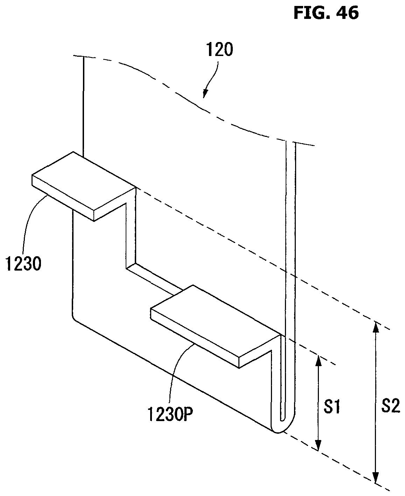

As shown in FIG. 46, the back cover 120 may further include a fourth protrusion 1230P.

The fourth protrusion 1230P may be positioned adjacent to the third protrusion 1230.

The fourth protrusion 1230P may be separated from an end of the back cover 120 by a first distance S1, and the third protrusion 1230 may be separated from the end of the back cover 120 by a second distance S2 longer than the first distance S1.

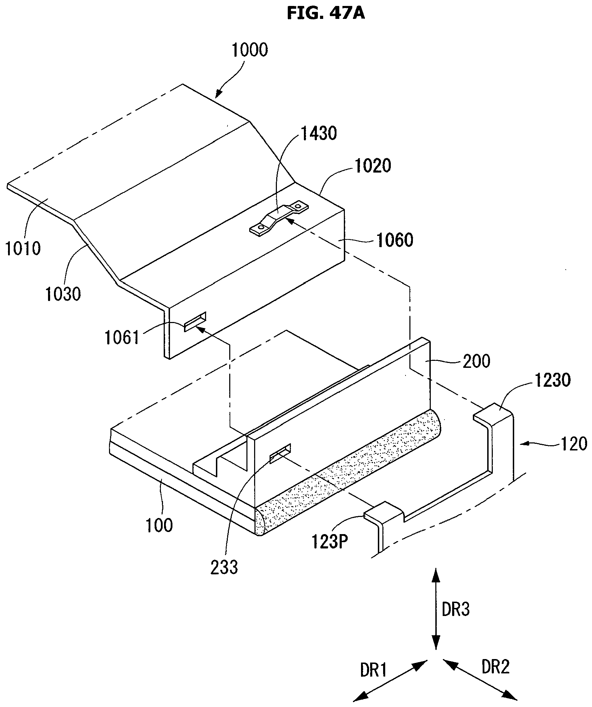

As shown in FIG. 47A, the side wall of the guide panel 200 may include a first through hole 233 corresponding to the fourth protrusion 1230P, and the frame 1000 may include a second through hole 1061 corresponding to the first through hole 233.

In such a structure, the third protrusion 1230 of the back cover 120 may be connected to the third connector 1430, and the fourth protrusion 1230P of the back cover 120 may pass through the first through hole 233 and may be connected to the second through hole 1061. Hence, the structural stability of the display device 10 may be improved.

The frame 1000 may include the first horizontal frame part 1010, the second horizontal frame part 1020, and the inclined frame part 1030. The frame 1000 may further include another vertical frame part 1060 extending from the second horizontal frame part 1020 in the vertical direction (i.e., the third direction DR3). The vertical frame part 1060 may extend toward the display panel 100.

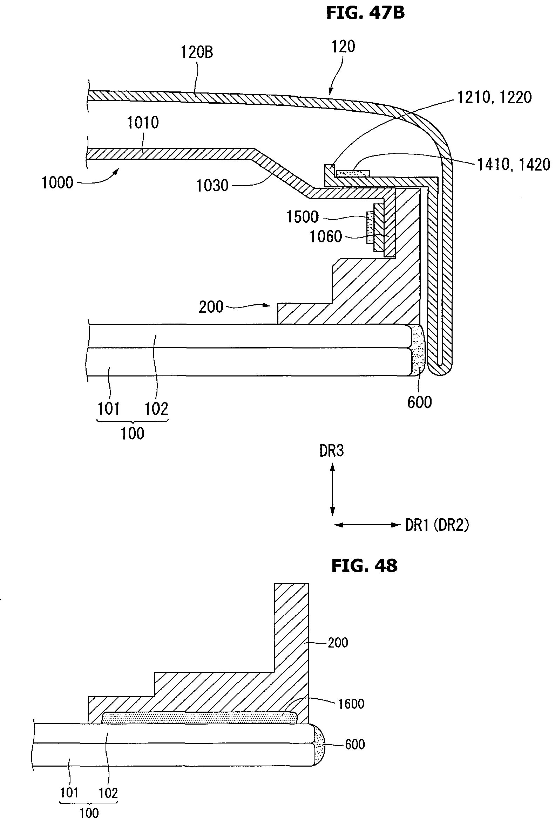

As shown in FIG. 47B, when the frame 1000 includes the vertical frame part 1060 extending from the second horizontal frame part 1020 toward the display panel 100 as described above, a light source 1500 may be disposed on the vertical frame part 1060. The backlight unit of such a structure may be referred to as the edge type backlight unit.

As shown in FIG. 48, the guide panel 200 may be attached to the back surface of the display panel 100. In this instance, the fixer 300 may be omitted.

For this, an adhesive layer 1600 may be formed between the guide panel 200 and the display panel 100.

The shapes of the first, second, and third connectors 1410, 1420, and 1430 of the frame 1000 may be variously changed. Other shapes of first, second, and third connectors are described below.

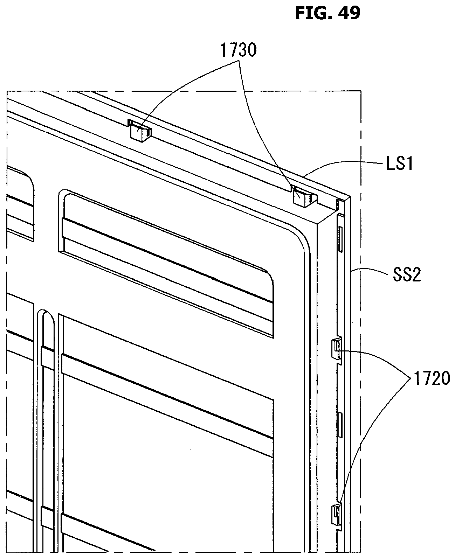

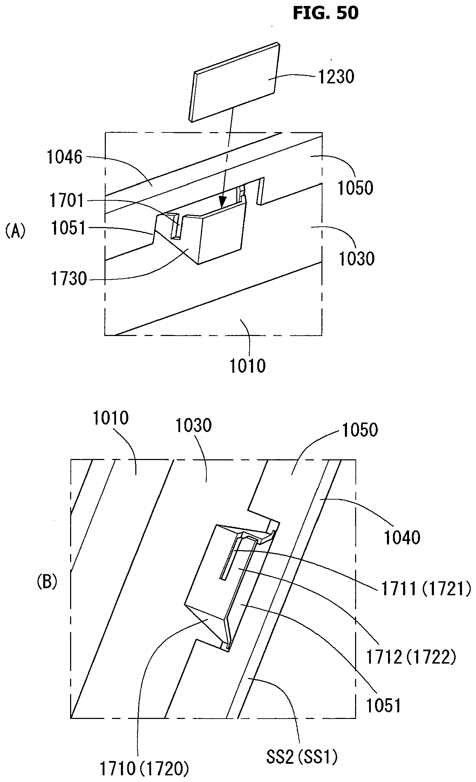

As shown in FIGS. 49 and 50, a third connector 1730 may be positioned on the first long side LS1 of the frame 1000, a second connector 1720 may be positioned on the second short side SS2 of the frame 1000, and a first connector 1710 may be positioned on the first short side SS1 of the frame 1000.

The first short side SS1 of the frame 1000 may be referred to as a fifth side area, the second short side SS2 of the frame 1000 may be referred to as a sixth side area, the first long side LS1 of the frame 1000 may be referred to as a seventh side area, and the second long side LS2 of the frame 1000 may be referred to as an eighth side area.

As shown in (A) of FIG. 50, the third connector 1730 of the frame 1000 may include a third convex part protruding from a main body of the frame 1000 toward the back cover 120. The third convex part may be formed using a drawing method, etc. In the following description, the third convex part may indicate the third connector 1730.

The third convex part 1730 may have a groove 1701 which is depressed toward the second long side LS2.

In such a structure, the third protrusion 1230 of the back cover 120 may be inserted into the groove 1701 of the third convex part 1730 in a direction from the first long side LS1 to the second long side LS2.

As shown in (B) of FIG. 50, the first connector 1710 of the frame 1000 may include a first convex part protruding from the frame 1000 toward the back cover 120, and the second connector 1720 of the frame 1000 may include a second convex part protruding from the frame 1000 toward the back cover 120. In the following description, the first convex part may indicate the first connector 1710, and the second convex part may indicate the second connector 1720.

The first connector 1710 may include a first arm 1712 protruding from the first convex part toward the first long side LS1.

The second connector 1720 may include a second arm 1722 protruding from the second convex part toward the first long side LS1.

Grooves 1711 and 1721, which are depressed toward the second long side LS2, may be respectively formed between the first arm 1712 and the frame 1000 and between the second arm 1722 and the frame 1000.

An example of a method for forming the first, second, and third connectors 1710, 1720, and 1730 is described below.

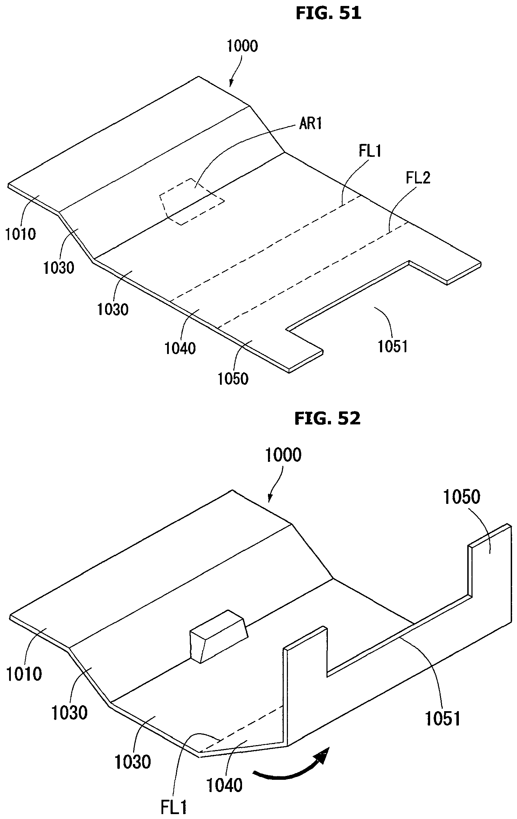

As shown in FIG. 51, a first area AR1 corresponding to the first, second, and third convex parts is determined at a boundary of the second horizontal frame part 1020 and the inclined frame part 1030 of the frame 1000.

An opening 1051 corresponding to the first, second, and third convex parts is formed in the third horizontal frame part 1050.

Next, as shown in FIG. 52, the first area AR1 may protrude using the drawing method, etc.

Hence, at least one of the first and second convex parts may overlap at least one of the second horizontal frame part 1020 and the inclined frame part 1030 of the frame 1000.

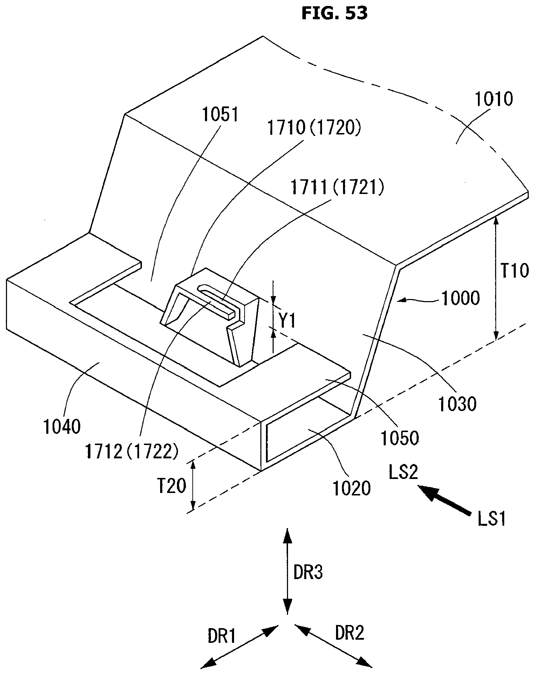

Afterwards, as shown in FIGS. 50 and 53, when the frame 1000 is folded along a first folding line FL1 and a second folding line FL2, the first, second, and third convex parts may be exposed through the opening 1051 of the third horizontal frame part 1050. Namely, the first, second, and third connectors 1710, 1720, and 1730 may pass through the opening 1051 of the third horizontal frame part 1050 and may be exposed.

As shown in FIG. 53, the first and second connectors 1710 and 1720 may protrude further than the third horizontal frame part 1050 by a predetermined height Y1. For this, it may be preferable, but not required, that a distance T10 between the first horizontal frame part 1010 and the second horizontal frame part 1020 in the vertical direction (i.e., the third direction DR3) is longer than a distance T20 between the second horizontal frame part 1020 and the third horizontal frame part 1050 in the vertical direction (i.e., the third direction DR3).

In this instance, the first and second protrusions 1210 and 1220 of the back cover 120 may be easily connected to the first and second connectors 1710 and 1720.

In such a structure, the first protrusion 1210 of the back cover 120 may be inserted into the groove 1711 of the first connector 1710 in the direction from the first long side LS1 to the second long side LS2 in the sliding manner. Further, the second protrusion 1220 of the back cover 120 may be inserted into the groove 1721 of the second connector 1720 in the direction from the first long side LS1 to the second long side LS2 in the sliding manner.

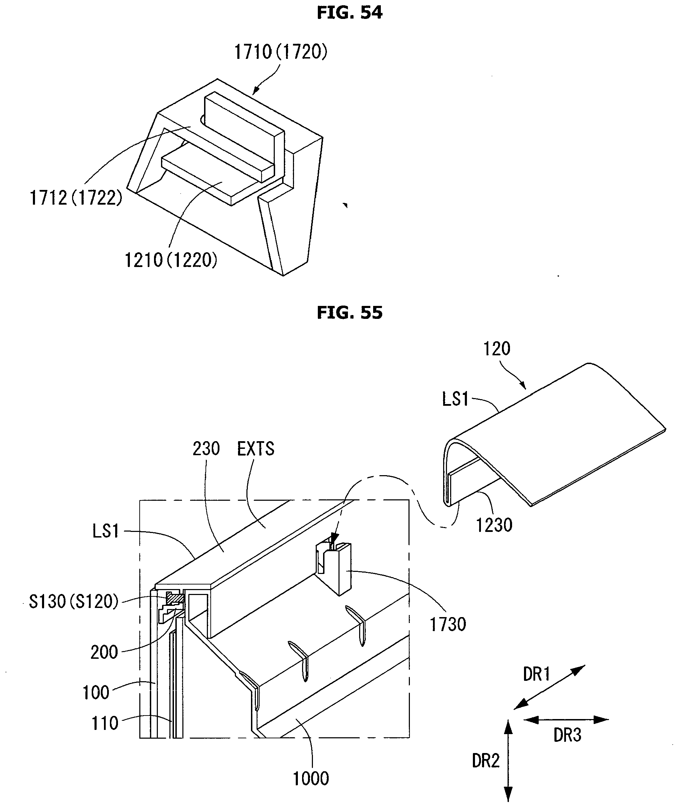

As a result, as shown in FIG. 54, the first protrusion 1210 may be engaged with the first connector 1710, and the second protrusion 1220 may be engaged with the second connector 1720.

As shown in FIG. 55, the third protrusion 1230 may be formed at an end (i.e., an end of the first long side LS1) of the back cover 120. The third protrusion 1230 may be inserted into the groove 1701 of the third connector 1730 (i.e., the third convex part) in the direction from the first long side LS1 to the second long side LS2.

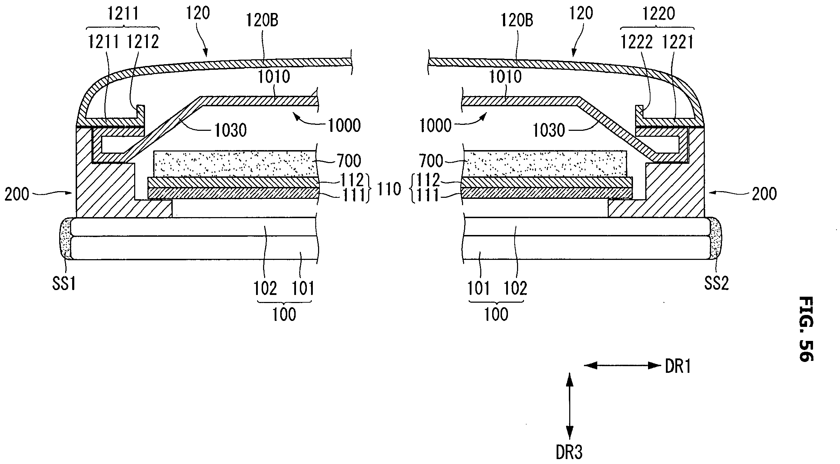

FIG. 56 shows a cross section taking the display device 10 along the transverse direction.

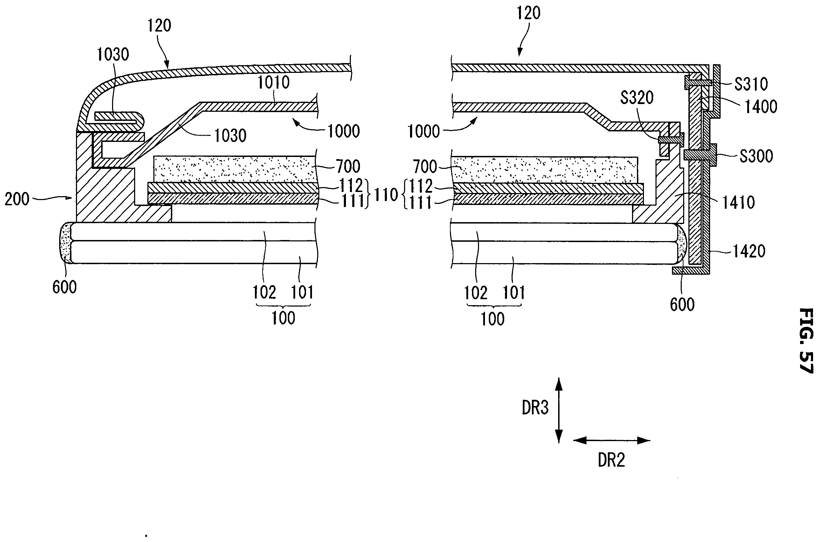

FIG. 57 shows a cross section taking the display device 10 along the longitudinal direction.

As described above, the edge of the front surface and the side of the display panel 100 may be exposed in a state where the back cover 120 is connected to the display module 100M.

The fact that the edge of the front surface of the display panel 100 is exposed may mean that the entire front surface of the display panel 100 is exposed. Hence, the visibility of the display device 10 may be improved.

Further, the fact that the side of the display panel 100 is exposed may mean that a resin layer 600 formed on the side of the front substrate 101 and/or the side of the back substrate 102 of the display panel 100 is exposed.

The guide panel 200 may be covered by the display panel 100. Namely, the guide panel 200 may be positioned in the rear of the display panel 100. In this instance, a visual effect, in which a bezel area of the display device 10 seems to be smaller than its original size, may be obtained.

An external surface EXTS of the guide panel 200 may be exposed. In other words, the external surface EXTS of the side wall SW of the guide panel 200 may be exposed.

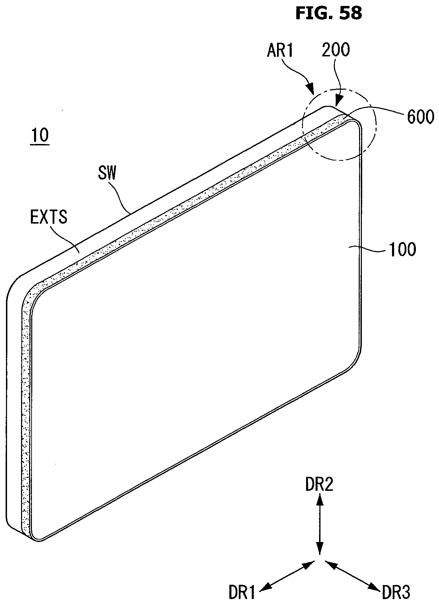

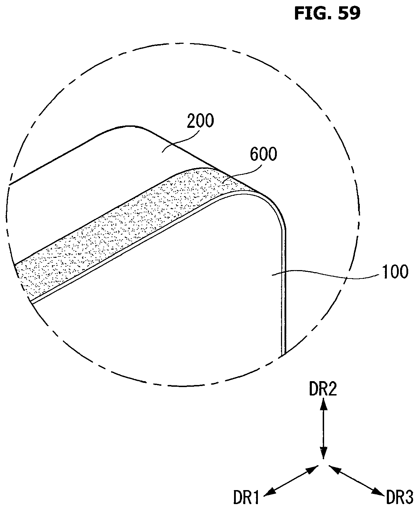

In this instance, as shown in FIGS. 58 and 59, the guide panel 200 may form an appearance of the side of the display device 10. Hence, the thickness of the display device 10 may be further reduced, and the size of the bezel area may be further reduced.

As described above, when the guide panel 200 forms the edge of the display device 10, it may be preferable, but not required, that the rigidity of the guide panel 200 is sufficiently large.

The guide panel 200 may contain a resin material and a glass fiber material, so as to improve the rigidity of the guide panel 200.

It may be preferable, but not required, that the guide panel 200 further contains a pigment material so as to improve the appearance of the display device 10.

The guide panel 200 may be formed by mixing the resin material, the glass fiber material, and the pigment material, pouring a mixture in a mold, and hardening the mixture. A content of the glass fiber material may be about 20 to 40 part by weight based on total weight of the mixture, so as to sufficiently secure the rigidity of the guide panel 200.

In this instance, even if the side wall of the guide panel 200 is relatively thin, the rigidity of the guide panel 200 may be sufficiently secured.

When the guide panel 200 contains the pigment material, a color of the guide panel 200 may be changed. It may be advantageous in the design of the display device 10.

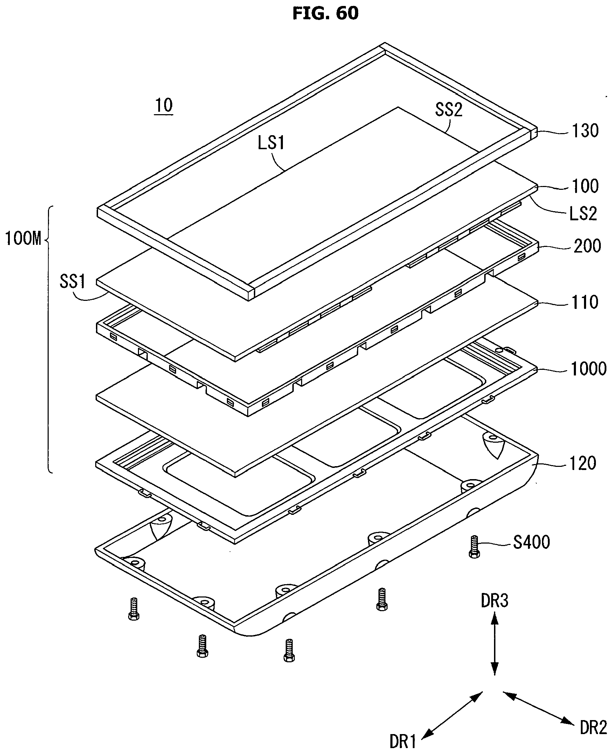

FIGS. 60 to 74 illustrate another configuration of a display device not according to the present invention. In the following description, the descriptions of the configuration and the structure described above may be omitted.

As shown in FIG. 60, the display device 10 may further include a top case 130.

The top case 130 may include a front part covering the edge of the front surface of the display panel 100 and a side part which extends from the front part and covers the side of the display panel 100.

The top case 130 may be divided into a plurality of parts.

The top case 130 is described in detail below.

In this instance, it may be regarded that the display module 100M includes the top case 130.

In FIG. 60, "S400" denote a fastening member for fastening the back cover 120 to the frame 1000.

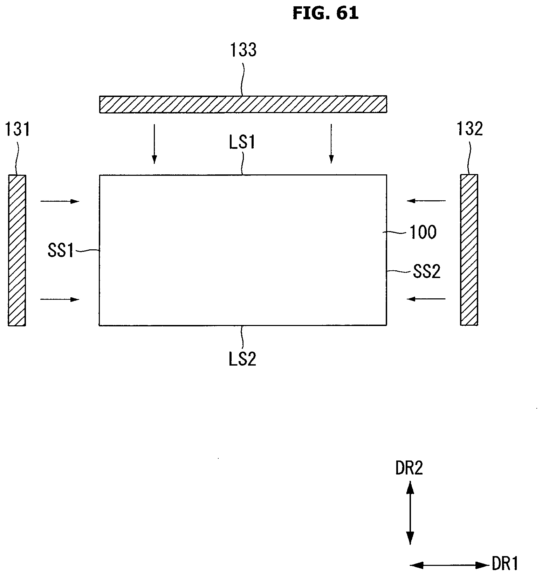

As shown in FIG. 61, the top case 130 may include a first top case 131 corresponding to the first short side SS1 of the display panel 100, a second top case 132 corresponding to the second short side SS2 of the display panel 100, and a third top case 133 corresponding to the first long side LS1 of the display panel 100.

The first top case 131 and the third top case 133 may be connected to each other at the corner of the display device 10, and also the second top case 132 and the third top case 133 may be connected to each other at the corner of the display device 10.

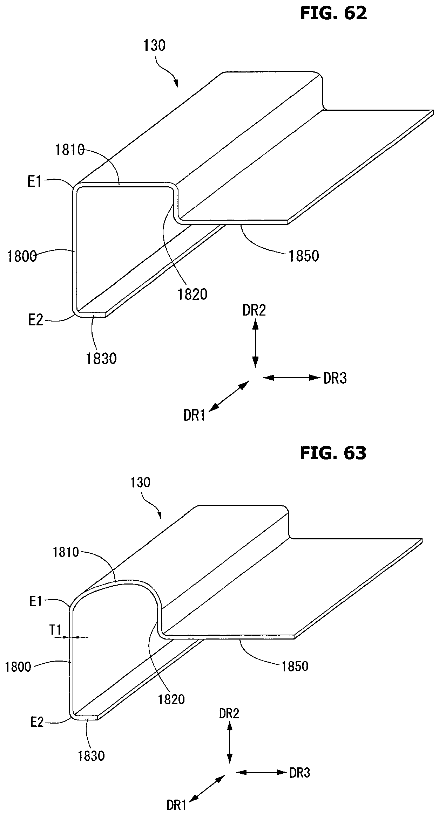

As shown in FIG. 62, the top case 130 may include a first part 1800, a second part 1810 connected to the first part 1800, and a third part 1820 connected to the second part 1810.

The first part 1800 may include a portion covering the edge of the front surface of the display panel 100.

The second part 1810 may include a portion which extends from a first end E1 of the first part 1800 and is positioned on the side of the display panel 100.

The third part 1820 may extend from an end of the second part 1810 in the second direction DR2 of the horizontal direction.

The top case 130 may further include a fourth part 1830 connected to the first part 1800 and a fifth part 1850 connected to the third part 1820.

The fourth part 1830 may extend from a second end E2 opposite the first end E1 of the first part 1800 in the vertical direction (i.e., the third direction DR3) and may be positioned on the front surface of the display panel 100.

The fifth part 1850 may extend from the third part 1820 in the vertical direction (i.e., the third direction DR3).

As shown in FIG. 63, the second part 1810 may include a portion having a surface curved in an oblique direction.

In this instance, the second part 1810 may extend from the first part 1800 in the oblique direction and may include a convexly curved surface.

The first part 1800 and the fourth part 1830 of the top case 130 may be commonly referred to as the front part including a portion positioned at the front surface of the display panel 100, and the second, third, and fifth parts 1810, 1820, and 1850 of the top case 130 may be commonly referred to as the side part including a portion positioned at the side of the display panel 100.

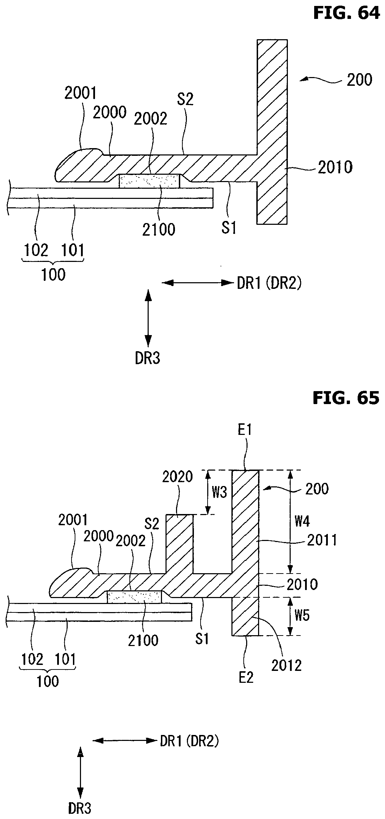

As shown in FIG. 64, the guide panel 200 may include a base part 2000 and a side wall 2010 connected to the base part 2000.

The base part 2000 may extend in the horizontal direction (i.e., the first direction DR1 and/or the second direction DR2).

The base part 2000 may be attached to the back surface of the display panel 100 using an adhesive layer 2100.

A groove 2002, to which the adhesive layer 2100 is applied, may be formed on a bottom surface (i.e., a first surface S1) of the base part 2000.

Further, a convex part 2001 protruding in the vertical direction (i.e., the third direction DR3) may be formed on an upper surface (i.e., a second surface S2) opposite the bottom surface S1 of the base part 2000.

As shown in FIG. 65, the guide panel 200 may further include an inner wall 2020. The inner wall 2020 may be positioned between the side wall 2010 and the convex part 2001.

The inner wall 2020 may extend from the upper surface S2 of the base part 2000 in the vertical direction (i.e., the third direction DR3).

The side wall 2010 may include a forward part 2012 extending from the base part 2000 to the forward in the vertical direction (i.e., the third direction DR3) and a backward part 2011 extending from the base part 2000 to the backward in the vertical direction (i.e., the third direction DR3).

A length W4 of the backward part 2011 may be longer than a length W5 of the forward part 2012.

Further, the length W4 of the backward part 2011 of the side wall 2010 may be longer than a length of the inner wall 2020 by a predetermined length W3.

The first end E1 of the side wall 2010 is one end of the backward part 2011, and the second end E2 of the side wall 2010 is one end of the forward part 2012. Further, the other end of the backward part 2011 of the side wall 2010 and the other end of the forward part 2012 may be connected to each other.

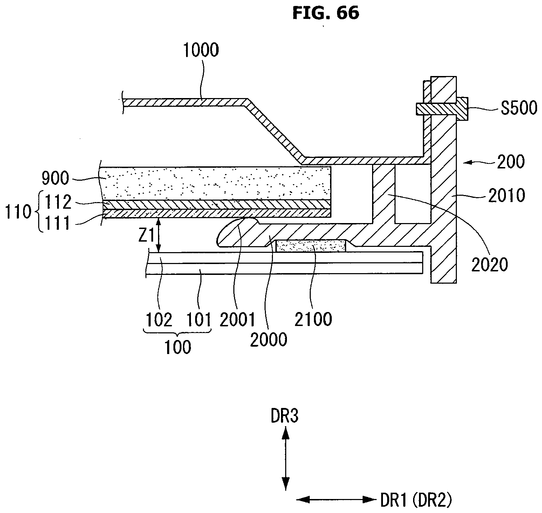

As shown in FIG. 66, the optical layer 110 may be disposed on the base part 2000 of the guide panel 200. More specifically, the optical layer 110 may be disposed on the convex part 2001 of the base part 2000 of the guide panel 200.

The convex part 2001 may reduce an area of a contact surface between the optical layer 110 and the guide panel 200.

The frame 1000 may be disposed on the inner wall 2020 of the guide panel 200.

Further, the frame 1000 may be connected to the side wall 2010 of the guide panel 200 using a predetermined fastening member S500.

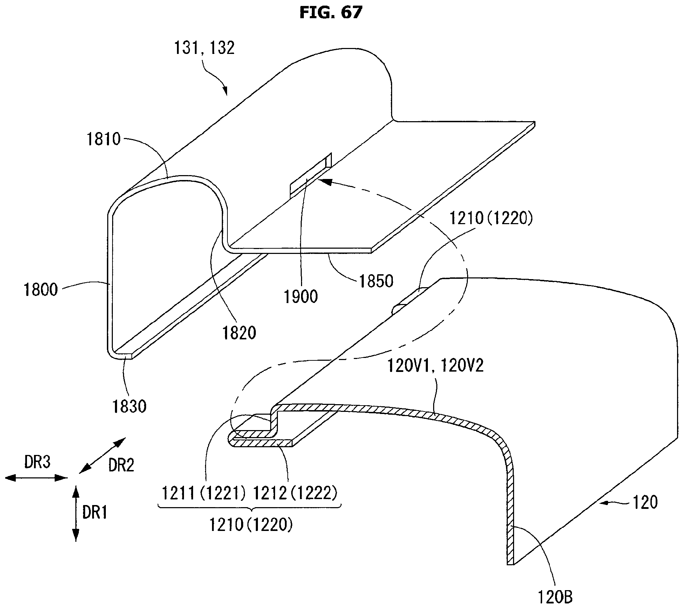

At least one connection hole may be formed in the side of the top case 130 to connect the top case 130 with the back cover 120. For example, as shown in FIG. 67, a first connection hole 1900 may be formed in the third parts 1820 of the first and second top cases 131 and 132.

The first connection hole 1900 may correspond to the first and second protrusions 1210 and 1220 of the back cover 120.

The first and second protrusions 1210 and 1220 may be inserted into the first connection hole 1900.

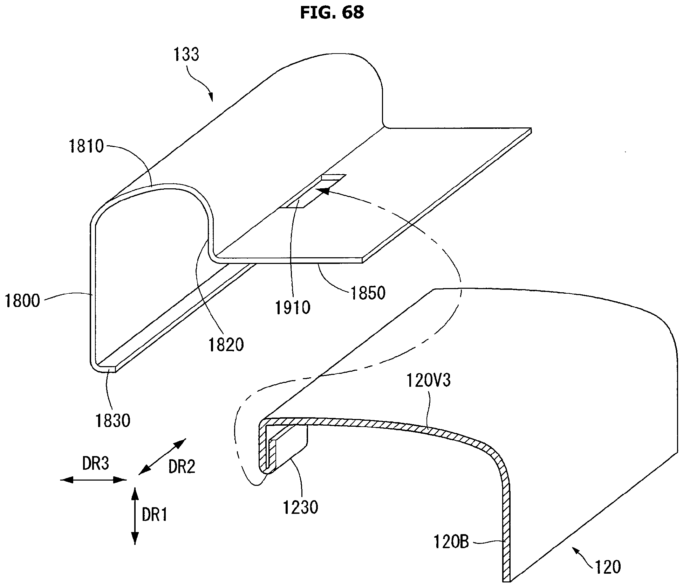

Alternatively, as shown in FIG. 68, a second connection hole 1910 may be formed in the fifth part 1850 of the third top case 133.

The second connection hole 1910 may correspond to the third protrusion 1230 of the back cover 120.

The third protrusion 1230 may be inserted into the second connection hole 1910.

More specifically, the third protrusion 1230 may be inserted into the second connection hole 1910 in the vertical direction (i.e., the third direction DR3).

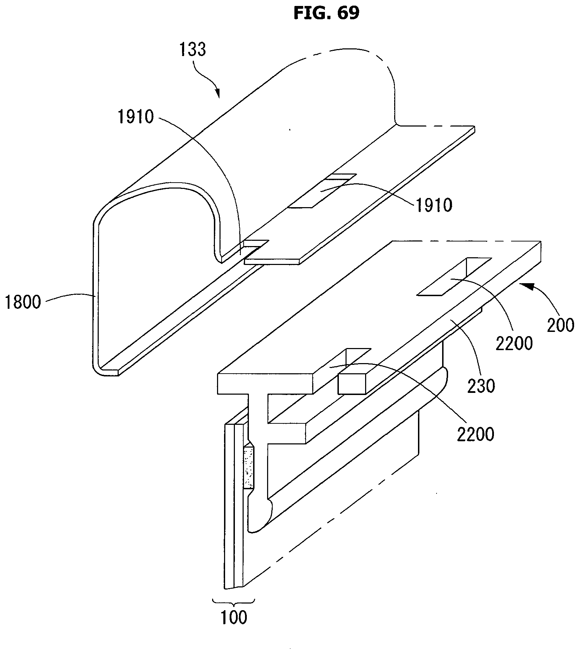

As shown in FIG. 69, an overlap hole 2200 corresponding to the second connection hole 1910 may be formed in the side wall of the guide panel 200. For example, the overlap hole 2200 may be formed in the side wall of the third guide panel 230.

In this instance, the third protrusion 1230 may sequentially pass through the second connection hole 1910 and the overlap hole 2200.

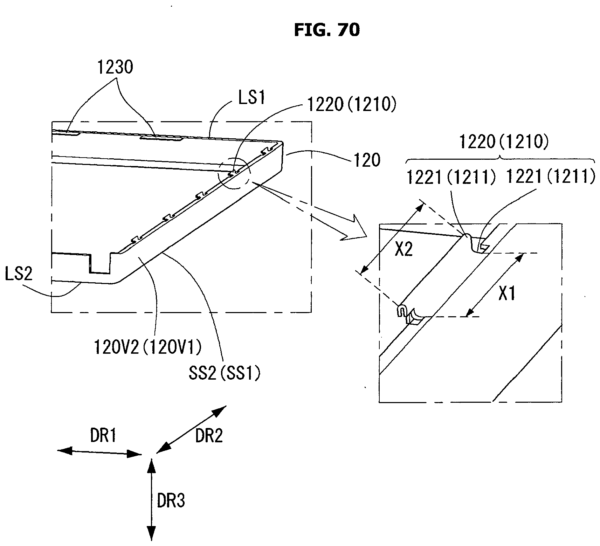

As shown in FIG. 70, the first and second protrusions 1210 and 1220 may be formed by folding the end of the back cover 120.

The second protrusion 1220 may include a second main protrusion 1221 extending from an end of the second vertical part 120V2 toward the first vertical part 120V1 and a second auxiliary protrusion 1222 extending from the second main protrusion 1221 in the vertical direction (i.e., the third direction DR3).

Further, the first protrusions 1210 may include a first main protrusion 1211 extending from an end of the first vertical part 120V1 toward the second vertical part 120V2 and a first auxiliary protrusion 1212 extending from the first main protrusion 1211 in the vertical direction (i.e., the third direction DR3).

The second auxiliary protrusion 1222 may further include a portion extending further than the second main protrusion 1221 in a direction from the first long side LS1 to the second long side LS2. Hence, a length X2 of the second auxiliary protrusion 1222 may be longer than a length X1 of the second main protrusion 1221.

Further, the first auxiliary protrusion 1212 may further include a portion extending further than the first main protrusion 1211 in a direction from the first long side LS1 to the second long side LS2. Hence, a length X2 of the first auxiliary protrusion 1212 may be longer than a length X1 of the first main protrusion 1211.

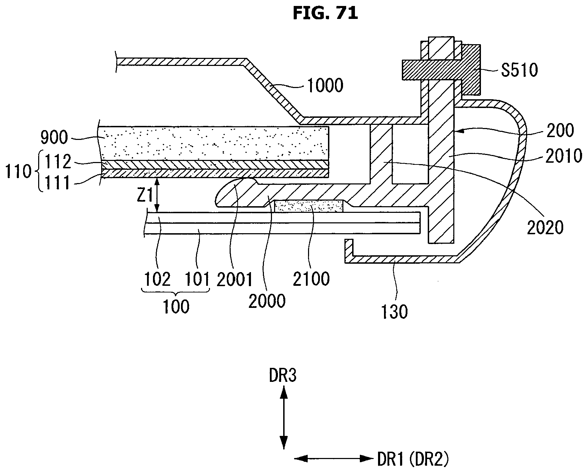

As shown in FIG. 71, the top case 130 may be connected to the guide panel 200.

Alternatively, the top case 130 may be connected to the frame 1000.

For example, a predetermined fastening member S510 may fasten the fifth part 1850 of the top case 130, the side wall SW of the guide panel 200, and the frame 1000 together.

A method for connecting the first and second protrusions 1210 and 1220 of the back cover 120 with the first connection hole 1900 is described below.

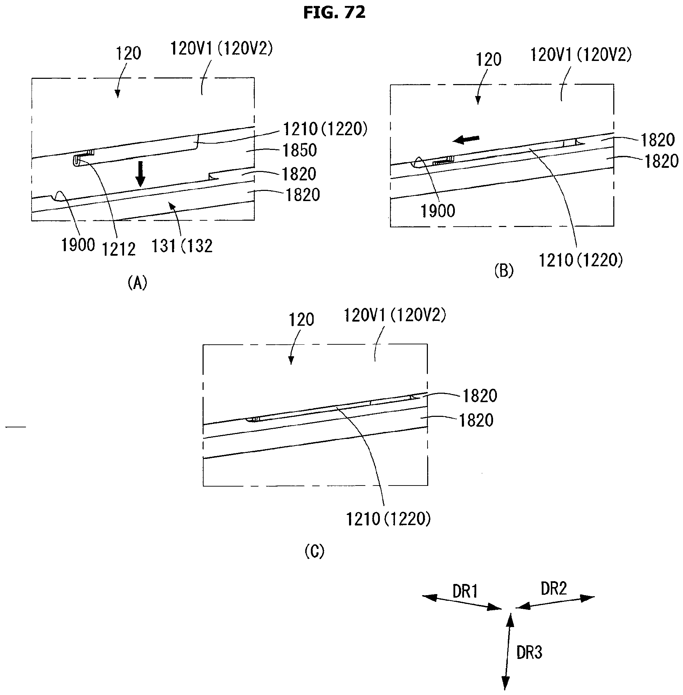

As shown in (A) of FIG. 72, the first and second protrusions 1210 and 1220 may be inserted into the first connection holes 1900 of the first and second top cases 131 and 132 in the vertical direction (i.e., the third direction DR3).

Afterwards, as shown in (B) of FIG. 72, the first and second protrusions 1210 and 1220 may slidingly move in the second direction DR2 in a state where the first and second protrusions 1210 and 1220 are inserted into the first connection hole 1900. As a result, as shown in (C) of FIG. 72, the first and second protrusions 1210 and 1220 may be engaged with the first connection hole 1900.

As described above, the back cover 120 may be connected to the display module 100M in the sliding manner.

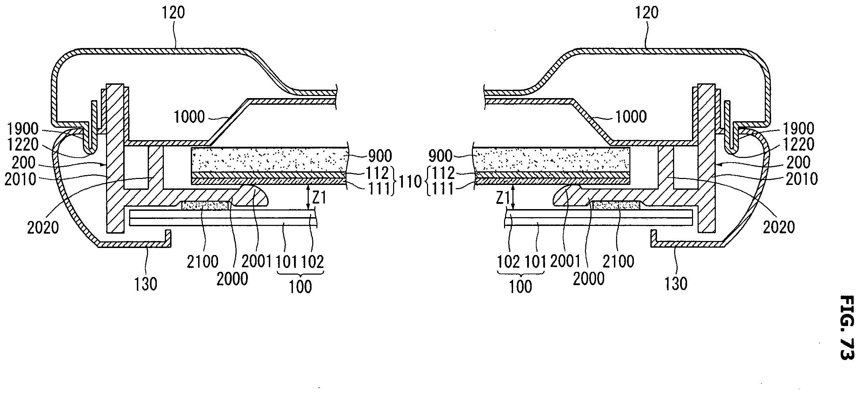

FIG. 73 shows a cross section taking the display device 10 along the transverse direction.

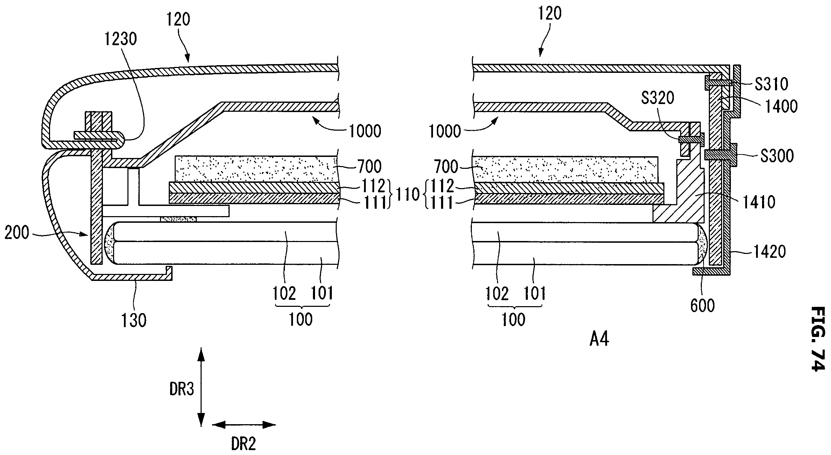

FIG. 74 shows a cross section taking the display device 10 along the longitudinal direction.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the invention as defined by the appended claims.

## Claims

1. A display device (10) comprising:
a display module (100M) including a display panel (100) including a front substrate (101) and a back substrate (102), a guide panel (200) positioned at an edge of a back surface of the display panel (100), and a frame (1000) which is positioned in the rear of the display panel (100) and is connected to the guide panel (200); and
a back cover (120) positioned in the rear of the display panel (100),
**characterized in that** the back cover (120) includes:
a plurality of first protrusions (1210) formed in a first side area, the first protrusions (1210) including a first main portion extending toward a second side area opposite the first side area; and
a plurality of second protrusions (1220) formed in the second side area, the second protrusions (1220) including a second main portion extending toward the first side area,
wherein the guide panel (200) includes:
a bottom portion (1311);
a plurality of first connectors (1310) connected to the first protrusions (1210), each of the plurality of first connectors (1310) including:
a first portion (1312) extending from the bottom portion (1311) in a third direction, the third direction being a direction from the display panel (100) to the back cover (120); and
a second portion (1313) extending from the first portion (1312) of each of the plurality of first connectors (1310) in a second direction, the second direction being a direction from a fourth side area which is adjacent to the first and second side areas to a third side area which is adjacent to the first and second side areas and opposite to the fourth side area, wherein a first gap (Ga) is formed between the bottom portion (1311) and the second portion (1313) of each of the plurality of first connectors (1310) and is open in the second direction; and
a plurality of second connectors (1320) connected to the second protrusions (1220), each of the plurality of second connectors (1320) including:
a first portion (1312) extending from the bottom portion (1311) in the third direction; and
a second portion (1313) extending from the first portion (1312) of each of the plurality of second connectors (1320) in the second direction, wherein a second gap (Ga) is formed between the bottom portion (1311) and the second portion (1313) of each of the plurality of the second connectors (1320) and is open in the second direction,
wherein each of the plurality of first protrusions (1210) is inserted into the first gap (Ga) formed at each of the plurality of first connectors (1310) and each of the plurality of second protrusions (1220) is inserted into the second gap (Ga) formed at each of the plurality of second connectors (1320),
wherein the plurality of first protrusions (1210) are arranged along the first side area and separated from each other, and the plurality of second protrusions (1220) are arranged along the second side area and separated from each other,
wherein the plurality of first connectors (1310) are separated from each other, and the plurality of the second connectors (1320) are separated from each other.

2. The display device of claim 1,
wherein the back cover (120) further includes a plurality of third protrusions (1230) formed in the third side area, each of the plurality of third protrusions (1230) including a portion extending toward the fourth side area,
wherein the guide panel (200) further includes a plurality of third connectors (231) corresponding to the plurality of third protrusions (1230).

3. The display device (10) of claim 2,
wherein the plurality of first protrusions (1210), the plurality of second protrusions (1220), and the plurality of third protrusions (1230) are arranged to be connected to the plurality of first connectors (1310), the plurality of second connectors (1320), and the plurality of third connectors (231), respectively, by sliding the back cover in a direction from the third side area to the fourth side area.

4. The display device (10) of claim 2,
wherein the guide panel (200) includes a first guide panel (210) corresponding to the first side area, a second guide panel (220) corresponding to the second side area, and a third guide panel (230) corresponding to the third side area,
wherein the plurality of first connectors (1310) are formed on the first guide panel (210), the plurality of second connectors (1320) are formed on the second guide panel (220), and the plurality of third connectors (231) are formed on the third guide panel (230).

5. The display device (10) of claim 4,
wherein the first, the second, and the third guide panels (210, 220, 230) form one body,
wherein the first, the second, and the third guide panels (210, 220, 230) include a side wall extending in the third direction,
wherein the plurality of first connectors (1310) are formed on the side wall of the first guide panel (210), and the plurality second connectors (1320) are formed on the side wall of the second guide panel (220).

6. The display device (10) of claim 5,
wherein the display module (100M) further includes at least one fixer (300) attached to a back surface of the display panel (100) using an adhesive layer,
wherein the guide panel (200) is connected to the fixer (300).

7. The display device (10) of claim 5,
wherein a distance between a neighboring two first connectors among the plurality of first connectors (1310) is greater than a length of one of the plurality of first protrusions (1210) in the second direction,
wherein a distance between a neighboring two second connectors among the plurality of second connectors (1320) is greater than a length of one of the plurality of second protrusions (1220) in the second direction.

8. The display device (10) as claimed in one of the preceding claims 5 to 7, wherein each of the plurality of third connectors (231) includes a groove which is depressed from an external surface of the side wall of the third guide panel (230) toward the fourth side area,
wherein each of the plurality of third protrusions (1230) is inserted into the groove of each of the plurality of third connectors (231).

9. The display device of claim 2,
wherein each of the plurality of first protrusions (1210) further includes:
a first auxiliary portion (1212) extended from the first main portion (1211) and bent in the third direction,
wherein each of the plurality of second protrusions (1220) further includes:
a second auxiliary portion (1222) extended from the second main portion (1221) and bent in the third direction.

10. The display device of claim 9,
wherein the second portion (1313) of each of the plurality of first or second connectors (1310, 1320) is positioned between the back cover (120) and the auxiliary portion (1212, 1222) of each of the plurality of first or second protrusions (1210, 1220), respectively, each of the plurality of first or second protrusions (1210, 1220) is inserted into the first or second gap (Ga), respectively, formed at each of the plurality of first or second connectors (1310, 1320).

## Patentansprüche

1. Anzeigevorrichtung (10), mit:
einem Anzeigemodul (100M), das ein Anzeigefeld (100) mit einem vorderen Substrat (101) und einem hinteren Substrat (102), eine Führungsplatte (200), die an einer Kante einer Rückseite des Anzeigefelds (100) angeordnet ist, und einen Rahmen (1000) umfasst, der in der Rückseite des Anzeigefelds angeordnet ist (100) und mit der Führungsplatte (200) verbunden ist; und
einer rückseitigen Abdeckung (120), die in der Rückseite des Anzeigefelds (100) angeordnet ist,
**dadurch gekennzeichnet, dass** die rückseitige Abdeckung (120) umfasst:
mehrere erste Vorsprünge (1210), die in einem ersten Seitenbereich gebildet sind, wobei die ersten Vorsprünge (1210) einen ersten Hauptabschnitt umfassen, der sich in Richtung zu einem dem ersten Seitenbereich gegenüberliegenden zweiten Seitenbereich erstreckt, und
mehrere zweite Vorsprünge (1220), die in dem zweiten Seitenbereich gebildet sind, wobei die zweiten Vorsprünge (1220) einen zweiten Hauptabschnitt umfassen, der sich in Richtung zu dem ersten Seitenbereich erstreckt,
wobei die Führungsplatte (200) umfasst:
einen unteren Abschnitt (1311);
mehrere erste Verbinder (1310), die mit den ersten Vorsprüngen (1210) verbunden sind, wobei jeder der mehreren ersten Verbinder (1310) aufweist:
einen ersten Abschnitt (1312), der sich von dem unteren Abschnitt (1311) in einer dritten Richtung erstreckt, wobei die dritte Richtung eine Richtung von dem Anzeigefeld (100) zu der rückseitigen Abdeckung (120) ist; und
einen zweiten Abschnitt (1313), der sich von dem ersten Abschnitt (1312) jeder der mehreren ersten Verbinder (1310) in einer zweiten Richtung erstreckt, wobei die zweite Richtung eine Richtung von einem vierten Seitenbereich, der benachbart zu den ersten und zweiten Seitenbereichen ist, zu einem dritten Seitenbereich ist, der benachbart zu den ersten und zweiten Seitenbereichen und dem vierten Seitenbereich gegenüberliegend ist, wobei ein erster Spalt (Ga) zwischen dem unteren Abschnitt (1311) und dem zweiten Abschnitt (1313) eines jeden der mehreren ersten Verbinder (1310) gebildet ist und in der zweiten Richtung offen ist, und
mehrere zweite Verbinder (1320), die mit den zweiten Vorsprüngen (1220) verbunden sind, wobei jeder der mehreren zweiten Verbinder (1320) umfasst:
einen ersten Abschnitt (1312), der sich von dem unteren Abschnitt (1311) in die dritte Richtung erstreckt; und
einen zweiten Abschnitt (1313), der sich von dem ersten Abschnitt (1312) eines jeden der mehreren zweiten Verbinder (1320) in die zweite Richtung erstreckt, wobei ein zweiter Spalt (Ga) zwischen dem unteren Abschnitt (1311) und dem zweiten Abschnitt (1313) eines jeden der mehreren zweiten Verbinder (1320) gebildet ist und in der zweiten Richtung offen ist,
wobei jeder der mehreren ersten Vorsprünge (1210) in den ersten Spalt (Ga) eingesetzt ist, der an jedem der mehreren ersten Verbinder (1310) gebildet ist, und jeder der mehreren zweiten Vorsprünge (1220) in den zweiten Spalt (Ga) eingesetzt ist, der an jedem der mehreren zweiten Verbinder (1320) gebildet ist,
wobei die mehreren ersten Vorsprünge (1210) entlang des ersten Seitenbereichs angeordnet und voneinander getrennt sind, und die mehreren zweiten Vorsprünge (1220) entlang des zweiten Seitenbereichs angeordnet und voneinander getrennt sind,
wobei die mehreren ersten Verbinder (1310) voneinander getrennt sind, und die mehreren zweiten Verbinder (1320) voneinander getrennt sind.

2. Anzeigevorrichtung nach Anspruch 1,
wobei die rückseitige Abdeckung (120) ferner mehrere dritte Vorsprünge (1230) umfasst, die in dem dritten Seitenbereich gebildet sind, wobei jeder der mehreren dritten Vorsprünge (1230) einen sich zu dem vierten Seitenbereich hin erstreckenden Abschnitt umfasst,
wobei die Führungsplatte (200) ferner mehrere dritte Verbinder (231) umfasst, die mit den mehreren dritten Vorsprüngen (1230) korrespondieren.

3. Anzeigevorrichtung (10) nach Anspruch 2,
wobei die mehreren ersten Vorsprünge (1210), die mehreren zweiten Vorsprünge (1220) und die mehreren dritten Vorsprünge (1230) so angeordnet sind, dass sie jeweils mit den mehreren ersten Verbindern (1310), den mehreren zweiten Verbindern (1320) und den mehreren dritten Verbinder (231) verbunden sind durch ein Verschieben der rückseitigen Abdeckung in eine Richtung von dem dritten Seitenbereich zu dem vierten Seitenbereich.

4. Anzeigevorrichtung (10) nach Anspruch 2,
wobei die Führungsplatte (200) eine dem ersten Seitenbereich entsprechende erste Führungsplatte (210), eine dem zweiten Seitenbereich entsprechende zweite Führungsplatte (220) und eine dem dritten Seitenbereich entsprechende dritte Führungsplatte (230) umfasst,
wobei die mehreren ersten Verbinder (1310) an der ersten Führungsplatte (210) gebildet sind, die mehreren zweiten Verbinder (1320) an der zweiten Führungsplatte (220) gebildet sind und die mehreren dritten Verbinder (231) an der dritten Führungsplatte (230) gebildet sind.

5. Anzeigevorrichtung (10) nach Anspruch 4,
wobei die erste, die zweite und die dritte Führungsplatte (210, 220, 230) einen Körper bilden,
wobei die erste, die zweite und die dritte Führungsplatte (210, 220, 230) eine sich in der dritten Richtung erstreckende Seitenwand aufweisen,
wobei die mehreren ersten Verbinder (1310) an der Seitenwand der ersten Führungsplatte gebildet sind (210) und die mehreren zweiten Verbinder (1320) an der Seitenwand der zweiten Führungsplatte (220) gebildet ist.

6. Anzeigevorrichtung (10) nach Anspruch 5,
wobei das Anzeigemodul (100M) ferner mindestens ein Fixierelement (300) umfasst, das mit einer Klebeschicht an einer Rückseite des Anzeigefelds (100) befestigt ist,
wobei die Führungsplatte (200) mit dem Fixierelement (300) verbunden ist.

7. Anzeigevorrichtung (10) nach Anspruch 5,
wobei ein Abstand zwischen zwei benachbarten ersten Verbindern unter den mehreren ersten Verbindern (1310) grösser ist als eine Länge eines der mehreren ersten Vorsprünge (1210) in der zweiten Richtung,
wobei ein Abstand zwischen zwei benachbarten zweiten Verbindern unter den mehreren zweiten Verbindern (1320) grösser ist als eine Länge eines der mehreren zweiten Vorsprünge (1220) in der zweiten Richtung.

8. Anzeigevorrichtung (10) nach einem der vorhergehenden Ansprüche 5 bis 7, wobei jeder der mehreren dritten Verbinder (231) eine Nut umfasst, die von einer Außenfläche der Seitenwand der dritten Führungsplatte (230) in Richtung auf den vierten Seitenbereich vertieft ist,
wobei jeder der mehreren dritten Vorsprünge (1230) in die Nut jedes der mehreren dritten Verbinder (231) eingesetzt ist.

9. Anzeigevorrichtung nach Anspruch 2,
wobei jeder der mehreren ersten Vorsprünge (1210) ferner umfasst:
einen ersten Hilfsabschnitt (1212), der sich von dem ersten Hauptabschnitt (1211) erstreckt und in der dritten Richtung gebogen ist,
wobei jeder der Vielzahl von zweiten Vorsprüngen (1220) ferner umfasst:
einen zweiten Hilfsabschnitt (1222), der sich von dem zweiten Hauptabschnitt (1221) erstreckt und in der dritten Richtung gebogen ist.

10. Anzeigevorrichtung nach Anspruch 9,
wobei der zweite Abschnitt (1313) eines jeden der mehreren ersten bzw. zweiten Verbinder (1310, 1320) zwischen der rückseitigen Abdeckung (120) und dem Hilfsabschnitt (1212, 1222) eines jeden der mehreren ersten bzw. zweiten Vorsprünge (1210, 1220) angeordnet ist, wobei jeder der mehreren ersten oder zweiten Vorsprünge (1210, 1220) in den ersten bzw. zweiten Spalt (Ga) eingesetzt ist, der an jedem der mehreren ersten oder zweiten Verbinder (1310, 1320) gebildet ist.

## Revendications

1. Dispositif (10) d'affichage comprenant :
un module (100M) d'affichage incluant un panneau (100) d'affichage incluant un substrat avant (101) et un substrat arrière (102), un panneau de guidage (200) positionné au niveau d'un bord d'une surface arrière du panneau (100) d'affichage, et un châssis (1000) qui est positionné dans l'arrière du panneau (100) d'affichage et est connecté au panneau de guidage (200) ; et
un capot arrière (120) positionné dans l'arrière du panneau (100) d'affichage,
**caractérisé en ce que** le capot arrière (120) inclut :
une pluralité de premières saillies (1210) formées dans une première zone latérale, les premières saillies (1210) incluant une première partie principale s'étendant vers une deuxième zone latérale opposée à la première zone latérale ; et
une pluralité de deuxièmes saillies (1220) formées dans la deuxième zone latérale, les deuxièmes saillies (1220) incluant une deuxième partie principale s'étendant vers la première zone latérale,
dans lequel le panneau de guidage (200) inclut une partie de fond (1311) ;
une pluralité de premiers connecteurs (1310) connectés aux premières saillies (1210), chacun de la pluralité de premiers connecteurs (1310) incluant :
une première partie (1312) s'étendant depuis la partie de fond (1311) dans un troisième sens, le troisième sens étant un sens du panneau (100) d'affichage jusqu'au capot arrière (120) ; et
une deuxième partie (1313) s'étendant depuis la première partie (1312) de chacun de la pluralité de premiers connecteurs (1310) dans un deuxième sens, le deuxième sens étant un sens d'une quatrième zone latérale qui est adjacente aux première et deuxième zones latérales jusqu'à une troisième zone latérale qui est adjacente aux première et deuxième zones latérales et opposée à la quatrième zone latérale, dans lequel un premier espace (Ga) est formé entre la partie de fond (1311) et la deuxième partie (1313) de chacun de la pluralité de premiers connecteurs (1310) et est ouvert dans le deuxième sens ; et
une pluralité de deuxièmes connecteurs (1320) connectés aux deuxièmes saillies (1220), chacun de la pluralité de deuxièmes connecteurs (1320) incluant :
une première partie (1312) s'étendant depuis la partie de fond (1311) dans le troisième sens ; et
une deuxième partie (1313) s'étendant depuis la première partie (1312) de chacun de la pluralité de deuxièmes connecteurs (1320) dans le deuxième sens, dans lequel un deuxième espace (Ga) est formé entre la partie de fond (1311) et la deuxième partie (1313) de chacun de la pluralité de deuxièmes connecteurs (1320) et est ouvert dans le deuxième sens,
dans lequel chacune de la pluralité de premières saillies (1210) est insérée dans le premier espace (Ga) formé au niveau de chacun de la pluralité de premiers connecteurs (1310) et chacune de la pluralité de deuxièmes saillies (1220) est insérée dans le deuxième espace (Ga) formé au niveau de chacun de la pluralité de deuxièmes connecteurs (1320),
dans lequel la pluralité de premières saillies (1210) sont agencées le long de la première zone latérale et séparées les unes des autres, et la pluralité de deuxièmes saillies (1220) sont agencées le long de la deuxième zone latérale et séparées les unes des autres,
dans lequel la pluralité de premiers connecteurs (1310) sont séparés les uns des autres, et la pluralité de deuxièmes connecteurs (1320) sont séparés les uns des autres.

2. Dispositif d'affichage selon la revendication 1,
dans lequel le capot arrière (120) inclut en outre une pluralité de troisièmes saillies (1230) formées dans la troisième zone latérale, chacune de la pluralité de troisièmes saillies (1230) incluant une partie s'étendant vers la quatrième zone latérale,
dans lequel le panneau de guidage (200) inclut en outre une pluralité de troisièmes connecteurs (231) correspondant à la pluralité de troisièmes saillies (1230).

3. Dispositif (10) d'affichage selon la revendication 2,
dans lequel la pluralité de premières saillies (1210), la pluralité de deuxièmes saillies (1220) et la pluralité de troisièmes saillies (1230) sont agencées de manière à être connectées à la pluralité de premiers connecteurs (1310), la pluralité de deuxièmes connecteurs (1320) et la pluralité de troisièmes connecteurs (231), respectivement, en faisant coulisser le capot arrière dans un sens de la troisième zone latérale jusqu'à la quatrième zone latérale.

4. Dispositif (10) d'affichage selon la revendication 2,
dans lequel le panneau de guidage (200) inclut un premier panneau de guidage (210) correspondant à la première zone latérale, un deuxième panneau de guidage (220) correspondant à la deuxième zone latérale, et un troisième panneau de guidage (230) correspondant à la troisième zone latérale,
dans lequel la pluralité de premiers connecteurs (1310) sont formés sur le premier panneau de guidage (210), la pluralité de deuxièmes connecteurs (1320) sont formés sur le deuxième panneau de guidage (220), et la pluralité de troisièmes connecteurs (231) sont formés sur le troisième panneau de guidage (230).

5. Dispositif (10) d'affichage selon la revendication 4,
dans lequel les premier, deuxième et troisième panneaux de guidage (210, 220, 230) forment un corps,
dans lequel les premier, deuxième et troisième panneaux de guidage (210, 220, 230) incluent une paroi latérale s'étendant dans le troisième sens,
dans lequel la pluralité de premiers connecteurs (1310) sont formés sur la paroi latérale du premier panneau de guidage (210), et la pluralité de deuxièmes connecteurs (1320) sont formés sur la paroi latérale du deuxième panneau de guidage (220).

6. Dispositif (10) d'affichage selon la revendication 5,
dans lequel le module (100M) d'affichage inclut en outre au moins un moyen de fixation (300) fixé à une surface arrière du panneau (100) d'affichage en utilisant une couche adhésive,
dans lequel le panneau de guidage (200) est connecté au moyen de fixation (300).

7. Dispositif (10) d'affichage selon la revendication 5,
dans lequel une distance entre deux premiers connecteurs voisins parmi la pluralité de premiers connecteurs (1310) est supérieure à une longueur d'une de la pluralité de premières saillies (1210) dans le deuxième sens,
dans lequel une distance entre deux deuxièmes connecteurs voisins parmi la pluralité de deuxièmes connecteurs (1320) est supérieure à une longueur d'une de la pluralité de deuxièmes saillies (1220) dans le deuxième sens.

8. Dispositif (10) d'affichage selon l'une des revendications précédentes 5 à 7,
dans lequel chacun de la pluralité de troisièmes connecteurs (231) inclut une rainure qui est renfoncée depuis une surface externe de la paroi latérale du troisième panneau de guidage (230) vers la quatrième zone latérale,
dans lequel chacune de la pluralité de troisièmes saillies (1230) est insérée dans la rainure de chacun de la pluralité de troisièmes connecteurs (231).

9. Dispositif (10) d'affichage selon la revendication 2,
dans lequel chacune de la pluralité de premières saillies (1210) inclut en outre :
une première partie auxiliaire (1212) étendue depuis la première partie principale (1211) et incurvée dans le troisième sens,
dans lequel chacune de la pluralité de deuxièmes saillies (1220) inclut en outre :
une deuxième partie auxiliaire (1222) étendue depuis la deuxième partie principale (1221) et incurvée dans le troisième sens.

10. Dispositif (10) d'affichage selon la revendication 9,
dans lequel la deuxième partie (1313) de chacun de la pluralité de premiers ou deuxièmes connecteurs (1310, 1320) est positionnée entre le capot arrière (120) et la partie auxiliaire (1212, 1222) de chacune de la pluralité de premières ou deuxièmes saillies (1210, 1220), respectivement, chacune de la pluralité de premières ou deuxièmes saillies (1210, 1220) est insérée dans le premier ou le deuxième espace (Ga), respectivement, formé au niveau de chacun de la pluralité de premiers ou deuxièmes connecteurs (1310, 1320).
